(19) Europäisches Patentamt
European Patent Office
Office européen des brevets

(11) EP 3 083 081 B1

# (12) EUROPÄISCHE PATENTSCHRIFT

(45) Veröffentlichungstag und Bekanntmachung des Hinweises auf die Patenterteilung:
**18.04.2018 Patentblatt 2018/16**

(21) Anmeldenummer: **14827192.7**

(22) Anmeldetag: **17.12.2014**

(51) Int Cl.:
***B05D 7/14*** (2006.01) ***B05D 7/00*** (2006.01)
***C09D 167/06*** (2006.01) ***C09D 175/04*** (2006.01)
***C09D 175/06*** (2006.01) ***C08L 67/06*** (2006.01)
***C08K 5/5425*** (2006.01) ***C08K 5/5435*** (2006.01)
***C08G 18/68*** (2006.01) ***C08G 18/62*** (2006.01)
***C08G 18/71*** (2006.01) ***C08G 63/52*** (2006.01)
***C08G 63/695*** (2006.01) ***C08G 63/91*** (2006.01)
***C09D 5/00*** (2006.01)

(86) Internationale Anmeldenummer:
**PCT/EP2014/078248**

(87) Internationale Veröffentlichungsnummer:
**WO 2015/091662 (25.06.2015 Gazette 2015/25)**

## (54) HAFTVERMITTLER FÜR LÖSEMITTELBASIERTE FÜLLER

ADHESION PROMOTER FOR SOLVENT BASED FILLER

AGENT ADHÉSIF POUR AGENTS DE REMPLISSAGE SUR BASE SOLVANTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2013 EP 13197695**

(43) Veröffentlichungstag der Anmeldung:
**26.10.2016 Patentblatt 2016/43**

(73) Patentinhaber: **BASF Coatings GmbH**
**48165 Münster (DE)**

(72) Erfinder:
- **ANDERSEN, Audrée**
**48329 Havixbeck (DE)**
- **CORTEN, Cathrin**
**48149 Münster (DE)**
- **NIEMEIER, Manuela**
**48317 Drensteinfurt (DE)**
- **FOELLING, Frederik**
**48165 Münster (DE)**
- **HESENER, Simone**
**48163 Amelsbüren (DE)**
- **FREITAG, Nicole**
**48163 Münster (DE)**
- **BOSHE-PLOIS, Stefanie**
**48607 Ochtrup (DE)**

(74) Vertreter: **BASF IP Association**
**BASF SE**
**G-FLP-C006**
**67056 Ludwigshafen (DE)**

(56) Entgegenhaltungen:
**EP-A1- 1 995 261**
**EP-A2- 0 432 748**
**WO-A1-2009/086034**
**WO-A2-2008/067967**
**US-A- 6 048 579**
**US-A1- 2007 066 766**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 083 081 B1

## Beschreibung

Die Erfindung betrifft einen lösemittelbasierten Füller. Sie betrifft weiterhin ein Verfahren zur Herstellung einer Mehrschichtlackierung auf einem Substrat sowie entsprechende Mehrschichtlackierungen auf einem Substrat. Schließlich betrifft die vorliegende Erfindung die Verwendung der erfindungsgemäßen Additive zur Haftungsverbesserung in einem lösemittelbasierten Füller.

## Stand der Technik

An den Lackaufbau von Nutzfahrzeugen werden hohe Anforderungen gestellt. Bei einem typischen Aufbau sind auf einem mit einer Elektrotauchlackierung beschichteten Metallsubstrat eine Füllerschicht und eine Decklackschicht aufgebracht. Üblicherweise vereint die Decklackschicht die Funktionen eines Basis- und eines Klarlacks miteinander. Dementsprechend enthält ein Decklack beispielsweise Pigmente und bedingt somit im Wesentlichen den farblichen Gesamteindruck der Lackierung. Weiterhin besitzt er auch typische, für einen Klarlack charakteristische Eigenschaften wie zum Beispiel eine entsprechende Kratzfestigkeit. Üblicherweise handelt es sich sowohl bei dem Füller als auch bei dem Decklack um lösemittelbasierte Systeme. Die Lackierung von Nutzfahrzeugen erfolgt vielfach nicht automatisch. Das heißt die entsprechenden Beschichtungsstoffe werden von Hand, also beispielsweise mittels Spritzapplikation, aufgetragen. In solchen Fällen werden vornehmlich Zweikomponenten-Lacksysteme verwendet, die eine Härtung bei moderaten Temperaturen erlauben. Ein nach wie vor großes Problem bei einer hieraus resultierenden Lackierung stellt die Haftung zwischen Füller- und Decklackschicht sowie die Haftung zwischen Füller und Substrat dar.

Ein vergleichbares Problem stellt sich auch bei der Automobilreparaturlackierung. In der Automobilreparaturlackierung soll das Lackierergebnis nach einem Schadensfall reproduziert oder ein Lackierfehler behoben werden. Die Reparatur einer Automobillackierung kann beispielsweise so erfolgen, dass die beschädigte Stelle zunächst abgeschliffen und anschließend ein Primer, ein Füller, ein Basislack und ein Klarlack appliziert werden. Hierbei werden andere Lacksysteme als in der Automobilserienlackierung verwendet. Dies hängt im Wesentlichen damit zusammen, dass die Automobilreparaturlackierung an einem komplett montierten und ausgestatteten Automobil durchgeführt werden muss. Fertig montierte und ausgestattete Automobile können aber nur Temperaturen von 60 bis maximal 100 °C ausgesetzt werden. Es werden daher vornehmlich Zweikomponenten-Lacksysteme verwendet, die eine Härtung bei diesen Temperaturen erlauben. Nach wie vor problematisch ist hier die Haftung zwischen Füller- und Basislackschicht sowie die Haftung zwischen Füller und Primer.

Aus EP 1 995 261 A1 sind Alkoxygruppen aufweisende Prepolymere auf Basis von niedrigviskosen Polyesterpolyolen bekannt. US-Patent Nr. 6,048,579 offenbart eine Kombination aus einem Silangruppen-modifizierten gesättigten Polyester und einem Haftvermittler. Aus WO 2008/067967 A2 sind ungesättigte Polyesterpolyole bekannt.

## Aufgabenstellung

Der vorliegenden Erfindung lag daher die Aufgabe zu Grunde, die Haftung zwischen der Füllerschicht und den an diese angrenzenden Schichten zu verbessern. Ein solcher Füller soll sowohl in der Lackierung von Nutzfahrzeugen als auch in der Automobilreparaturlackierung einsetzbar sein. Im Falle der Lackierung von Nutzfahrzeugen soll dabei die Haftung zwischen Füller- und Decklackschicht sowie die Haftung zwischen Füller und Substrat verbessert werden. Bei der Automobilreparaturlackierung geht es darum, die Haftung zwischen Füller- und Basislackschicht sowie die Haftung zwischen Füller und Primer zu verbessern.

## Erfindungsgemäße Lösung

Diese Aufgabe wurde überraschenderweise durch einen lösemittelbasierten Füller gelöst, welcher dadurch gekennzeichnet, dass dieser mindestens ein Additiv enthält, welches herstellbar ist durch die Umsetzung von

(a) mindestens einem alpha,omega-hydroxyfunktionalisierten Oligoester, welcher eine OH-Zahl von 30 bis 160 mg KOH/g, einen theoretischen Kohlenstoff-Kohlenstoff-Doppelbindungsgehalt von 1 bis 2,5 mmol/g, ein zahlenmittleres Molekulargewicht von 1000 bis 3000 g/mol und ein gewichtsmittleres Molekulargewicht von 2800 bis 10000 g/mol besitzt, und
(b) mindestens einem Alkoxysilan der Strukturformel (II)

$$A\text{-}R\text{-}Si(R')_x(OR'')_{3-x}$$

wobei

- A eine OH-reaktive funktionelle Gruppe ist, nämlich eine Isocyanatgruppe oder eine Epoxidgruppe,
- R ein aliphatischer Rest mit 2 bis 12 Kohlenstoffatomen, ein cycloaliphatischer Rest mit 3 bis 12 Kohlenstoffatomen, ein aromatischer Rest mit 6 bis 12 Kohlenstoffatomen oder ein araliphatischer Rest mit 7 bis 18 Kohlenstoffatomen ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt,

mit der Maßgabe, dass mindestens 90 mol-% aller OH-Gruppen des alpha,omega-hydroxyfunktionalisierten Oligoesters mit einer OH-reaktiven funktionellen Gruppe A zur Reaktion gebracht worden sind,
und zudem die Summe über die gewichtsprozentualen Anteile aller erfindungsgemäßen Additive 1,5 bis 10 Gew.-% bezogen auf die Gesamtmenge des lösemittelbasierten Füllers beträgt.

Bevorzugt werden mindestens 95 mol-%, besonders bevorzugt mindestens 97 mol-% und ganz besonders mindestens 99 mol-% sowie ebenso 100 mol-% aller OH-Gruppen des alpha,omega-hydroxyfunktionalisierten Oligoesters mit einer OH-reaktiven funktionellen Gruppe A zur Reaktion gebracht. Die Menge der OH-Gruppen des alpha,omega-hydroxyfunktionalisierten Oligoesters, die mit den OH-reaktiven funktionellen Gruppen A des Alkoxysilans (II) zur Reaktion gebracht worden sind, lässt sich beispielsweise indirekt über die Bestimmung der Menge der noch nicht zur Reaktion gebrachten OH-reaktiven funktionellen Gruppen A des Alkoxysilans (II) bestimmen.

**Beschreibung des alpha,omega-hydroxyfunktionalisierten Oligoesters**

Der Begriff alpha,omega-hydroxyfunktionalisierter Oligoester bezeichnet einen Oligoester, an dessen entgegengesetzten Enden, welche mit alpha beziehungsweise omega bezeichnet werden, sich jeweils eine Hydroxylgruppe befindet. Hierunter ist zu verstehen, dass ein solcher Oligoester an beiden Enden durch jeweils eine Monomereinheit terminiert ist, welche jeweils genau eine Hydroxylgruppe trägt. Handelt es sich um einen verzweigten Oligoester, so bezeichnen alpha und omega die Enden der längsten Polymerkette im Monomer. Die Länge bemisst sich dabei an der Anzahl der eingebauten Monomere. Es ist weiterhin nicht ausgeschlossen, dass der alpha,omega-hydroxyfunktionalisierte Oligoester weitere Hydroxylgruppen besitzt. Es ist bevorzugt, dass der erfindungsgemäß einzusetzende alpha,omega-hydroxyfunktionalisierte Oligoester genau zwei Hydroxylgruppen jeweils eine in alpha- und eine in omega-Position besitzt. Es ist besonders bevorzugt, dass der erfindungsgemäß einzusetzende alpha,omega-hydroxyfunktionalisierte Oligoester genau zwei Hydroxylgruppen jeweils eine in alpha- und eine in omega-Position besitzt und zudem linear ist.

Der erfindungsgemäß einzusetzende alpha,omega-hydroxyfunktionalisierte Oligoester besitzt bevorzugt ein OH-Zahl von 40 bis 160 mg KOH/g und besonders bevorzugt von 70 bis 150 mg KOH/g. Die OH-Zahl kann nach DIN 53240-2 (Datum: November 2007) wie folgt bestimmt werden. Die OH-Gruppen werden durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1g Substanz gebundenen Menge Essigsäure äquivalent ist.

Weiterhin besitzt der erfindungsgemäß einzusetzende alpha,omega-hydroxyfunktionalisierte Oligoester eine Säurezahl von bevorzugt 0 bis 10 mg KOH/g, besonders bevorzugt 0 bis 5 mg KOH/g und ganz besonders bevorzugt 0 bis 3 mg KOH/g. Die Bestimmung der Säurezahl erfolgt gemäß DIN EN ISO 2114 (Datum: Juni 2002). Dabei werden die in der Probe enthaltenen freien Säuren mit einer Kaliumhydroxid-Standardlösung in Anwesenheit eines Farbindikators titriert. Die Säurezahl entspricht der Masse an Kaliumhydroxid in mg, die zur Neutralisation von 1 g alpha,omega-hydroxyfunktionalisierten Oligoesters unter festgelegten Bedingungen erforderlich ist.

Der alpha,omega-hydroxyfunktionalisierte Oligoester besitzt weiterhin ein bevorzugtes zahlenmittleres Molekulargewicht von 1000 bis 2000 g/mol und besonders bevorzugt von 1200 bis 1800 g/mol sowie ein gewichtsmittleres Molekulargewicht von bevorzugt 3000 bis 8000 g/mol und besonders bevorzugt 3000 bis 6000 g/mol. Die Bestimmung des zahlenmittleren und des gewichtsmittleren Molekulargewichts erfolgt mittels Gelpermeationschromatographie mit Tetrahydrofuran als Elutionsmittel und unter Verwendung von Polystyrol-Standards und ist angelehnt an DIN 55672-1 (Datum: August 2007). Das Säulenmaterial besteht aus Styrol-Divinylbenzol-Copolymeren.

Es ist erfindungswesentlich, dass der alpha,omega-hydroxyfunktionalisierte Oligoester einen theoretischen Kohlenstoff-Kohlenstoff-Doppelbindungsgehalt von 1 bis 2,5 mmol/g, bevorzugt von 1,5 bis 2 mmol/g und besonders bevorzugt von 1,6 bis 1,9 mmol/g besitzt. Unter dem theoretischen Kohlenstoff-Kohlenstoff-Doppelbindungsgehalt ist die Stoffmenge der Kohlenstoff-Kohlenstoff-Doppelbindungen in der Einheit mmol bezogen auf die Masse des alpha,omega-hydroxyfunktionalisierten Oligoesters in der Einheit Gramm zu verstehen. Der theoretische Kohlenstoff-Kohlenstoff-Doppelbindungsgehalt, in der unten dargestellten Formel als Doppelbindungsgehalt bezeichnet, wird wie folgt berechnet:

$$Doppelbindungsgehalt = \frac{Stoffmenge(Doppelbindungen)}{Masse(Oligoester)}.$$

Dabei bezeichnet der Ausdruck "Stoffmenge(Doppelbindungen)" die Stoffmenge der Kohlenstoff-Kohlenstoff-Doppelbindungen in der Einheit mmol und der Ausdruck "Masse(Oligoester)" die Masse des alpha,omega-hydroxyfunktionalisierten Oligoesters in der Einheit Gramm.

Die Masse des alpha,omega-hydroxyfunktionalisierten Oligoesters ist die Summe der zu seiner Herstellung eingesetzten Monomere abzüglich der Masse des dabei entstehenden Wassers, wobei von einem vollständigen Umsatz aller Anhydridbeziehungsweise Carbonsäuregruppen ausgegangen wird. Die Stoffmenge der Kohlenstoff-Kohlenstoff-Doppelbindungen ergibt sich aus der Stoffmenge der eingesetzten ungesättigten Monomere. Werden beispielsweise ausschließlich einfach ungesättigte Monomere, wie zum Beispiel Maleinsäureanhydrid, eingesetzt, so ist die Stoffmenge der Kohlenstoff-Kohlenstoff-Doppelbindungen gleich der Stoffmenge der eingesetzten ungesättigten Monomere. Werden beispielsweise zweifach ungesättigte Monomere eingesetzt, so ist die Stoffmenge der durch solche Monomere in den alpha,omega-hydroxyfunktionalisierten Oligoester eingeführten Kohlenstoff-Kohlenstoff-Doppelbindungen doppelt so groß wie die eingesetzte Stoffmenge des entsprechenden zweifach ungesättigten Monomers.

Der alpha,omega-hydroxyfunktionalisierte Oligoester lässt sich beispielsweise aus der Reaktion von Polycarbonsäuren mit Polyolen darstellen. Bevorzugt wird er aus Reaktion von Dicarbonsäuren sowie deren Anhydriden und Diolen, Triolen sowie monohydroxyfunktionellen Verbindungen hergestellt. Bevorzugt werden Diole eingesetzt.

Erfolgt die Herstellung des alpha,omega-hydroxyfunktionalisierten Oligoesters mit Dicarbonsäuren, so können grundsätzlich auch deren Anhydride eingesetzt werden. Im Folgenden ist der Begriff Dicarbonsäure daher so zu verstehen, dass ebenfalls das korrespondierende Anhydrid eingeschlossen ist. Es gehört zum allgemeinen Wissen des Durchschnittsfachmanns zu entscheiden, die entsprechenden Verbindungen entweder als Dicarbonsäure oder als Anhydrid einzusetzen.

**Dicarbonsäuren**

Bei den erfindungsgemäß einzusetzenden Dicarbonsäuren kann es sich um aromatische oder aliphatische Verbindungen handeln. Bei aliphatischen Verbindungen handelt es sich um solche, die keine aromatischen Gruppen, wie beispielsweise einen Benzolrest enthalten. Als aromatische Verbindung im Sinne der vorliegenden Verbindung werden all jene verstanden, die mindestens eine aromatische Gruppe, wie beispielsweise einen gegebenenfalls substituierten Phenylrest enthalten. Als Beispiel für eine aromatische Verbindung seien beispielsweise die dem Fachmann bekannten Konstitutionsisomere der Benzoldicarbonsäure sowie Terephthalsäureanhydrid genannt.

Bevorzugt sind aliphatische Dicarbonsäuren. Besonders bevorzugt sind die aliphatischen Dicarbonsäuren gesättigt oder einfach oder mehrfach ungesättigt. Ganz besonders bevorzugt handelt es sich um lineare aliphatische Dicarbonsäuren, die entweder gesättigt oder einfach oder mehrfach ungesättigt sind. Daneben können auch cycloaliphatische Dicarbonsäuren eingesetzt werden.

Es ist weiterhin bevorzugt, dass mindestens eine gesättigte und mindestens eine einfach oder mehrfach ungesättigte aliphatische Dicarbonsäure eingesetzt werden. Besonders bevorzugt werden mindestens eine gesättigte lineare aliphatische Dicarbonsäure und mindestens eine einfach oder mehrfach ungesättigte lineare aliphatische Dicarbonsäure eingesetzt. Besonders bevorzugt werden genau eine gesättigte und genau eine einfach oder mehrfach ungesättigte aliphatische Dicarbonsäure eingesetzt. Ganz besonders bevorzugt werden genau eine gesättigte lineare und genau eine einfach oder mehrfach ungesättigte lineare aliphatische Dicarbonsäure eingesetzt.

Bevorzugt beträgt das molare Verhältnis von gesättigten zu einfach und/oder mehrfach ungesättigten aliphatischen Dicarbonsäuren 0,5 : 1,5 bis 1,5 : 0,5, besonders bevorzugt 0,75 : 1,25 bis 1,25 : 0,75 und ganz besonders bevorzugt 0,9 : 1,1 bis 1,1 : 0,9. Die genannten Verhältnisse beziehen sich sowohl auf den Fall, dass mehr als eine gesättigte und/oder mehr als eine ungesättigte Dicarbonsäure eingesetzt werden, als auch auf den Fall, dass genau eine gesättigte und genau eine ungesättigte Dicarbonsäure eingesetzt werden.

Als gesättigte aliphatische Dicarbonsäuren werden bevorzugt solche mit 4 bis 18, besonders bevorzugt 6 bis 14 und ganz besonders bevorzugt 6 bis 10 Kohlenstoffatomen eingesetzt. Besonders bevorzugt handelt es sich hierbei um lineare gesättigte aliphatische Dicarbonsäuren.

Als einfach ungesättigte aliphatische Dicarbonsäuren werden bevorzugt solche mit 4 bis 10, besonders bevorzugt 4 bis 8 und ganz besonders bevorzugt 4 bis 6 Kohlenstoffatomen eingesetzt. Besonders bevorzugt handelt es sich hier um entsprechende ungesättigte lineare aliphatische Dicarbonsäuren.

Als mehrfach ungesättigte aliphatische Dicarbonsäuren werden bevorzugt solche mit 6 bis 18, besonders bevorzugt 8 bis 16 und ganz besonders bevorzugt 10 bis 14 Kohlenstoffatomen eingesetzt. Besonders bevorzugt handelt es sich hier um entsprechende mehrfach ungesättigte lineare aliphatische Dicarbonsäuren.

Beispielsweise handelt es sich bei den gesättigten aliphatischen Dicarbonsäuren um Alkandisäuren. Bevorzugt

werden gesättigte Alkandisäuren eingesetzt, welche 4 bis 18, besonders bevorzugt 6 bis 14 und ganz besonders bevorzugt 6 bis 10 Kohlenstoffatome enthalten. Besonders bevorzugt handelt es sich hier um gesättigte lineare Alkandisäuren welche 4 bis 18, besonders bevorzugt 6 bis 14 und ganz besonders bevorzugt 6 bis 10 Kohlenstoffatome enthalten. Geeignete Alkandisäuren sind zum Beispiel Bernsteinsäure, Glutarsäure, Adipinsäure, Pimelinsäure, Korksäure, Azelainsäure, Sebacinsäure, Undecandisäure, Dodecandisäure, Tridecandisäure, Tetradecandisäure und Hexadecandisäure sowie deren Anhydride, insoweit diese existieren.

Als einfach ungesättigte aliphatische Dicarbonsäuren können Alkendisäuren eingesetzt werden, welche 4 bis 10, besonders bevorzugt 4 bis 8 und ganz besonders bevorzugt 4 bis 6 Kohlenstoffatome enthalten. Bevorzugt handelt es sich hier um entsprechende einfach ungesättigte lineare Alkendisäuren. Eine geeignete einfach ungesättigte lineare Alkendisäuren ist beispielsweise Maleinsäure.

**Diole**

Bei den bevorzugt einzusetzenden Diolen kann es sich um aromatische oder aliphatische Verbindungen handeln. Bevorzugt sind aliphatische Diole. Besonders bevorzugt handelt es sich um lineare oder cyclische aliphatische Diole. Diese können sowohl gesättigt als auch einfach oder mehrfach ungesättigt sein. Bevorzugt handelt es sich um gesättigte lineare oder gesättigte cyclische aliphatische Diole.

Es können beispielsweise gesättigte aliphatische Diole mit 4 bis 18, besonders bevorzugt 6 bis 14 und ganz besonders bevorzugt 6 bis 10 Kohlenstoffatomen eingesetzt werden. Bevorzugt handelt es sich hierbei um entsprechende gesättigte lineare oder gesättigte cyclische aliphatische Diole.

Bevorzugt werden gesättigte Alkandiole oder gesättigte Cycloalkandiole eingesetzt. Bei letztgenannten kann es sich um Monocycloalkandiole, Bicycloalkandiole oder Tricycloalkandiole handeln. Es können beispielsweise gesättigte Alkandiole mit 4 bis 18, besonders bevorzugt 6 bis 14 und ganz besonders bevorzugt 6 bis 10 Kohlenstoffatomen eingesetzt werden. Bevorzugt handelt es sich hier um entsprechende gesättigte lineare Alkandiole. Geeignete gesättigte Alkandiole sind zum Beispiel 1,4-Butandiol und 1,6-Hexandiol.

Ebenso können bevorzugt gesättigte cyclische aliphatische Diole mit 6 bis 18, besonders bevorzugt 6 bis 14 und ganz besonders bevorzugt 6 bis 10 Kohlenstoffatomen eingesetzt werden.

Es können bevorzugt gesättigte Cycloalkandiole mit 6 bis 18, besonders bevorzugt 6 bis 14 und ganz besonders bevorzugt 6 bis 10 Kohlenstoffatomen eingesetzt werden. Ganz besonders bevorzugt einzusetzende gesättigte Cyclolakandiole sind Tricyclodecandiol, Cyclohexyldimethanol und Tetramethylcyclobutandiol.

Zur Herstellung des alpha,omega-hydroxyfunktionalisierten Oligoesters wird ein Überschuss an Diolen eingesetzt. Das molare Verhältnis von Dicarbonsäuren zu den Diolen ist dann beispielsweise n : (n + 1,1) bis n : (n + 2), bevorzugt n : (n + 1,2) bis n : (n + 1,8), besonders bevorzugt n : (n + 1,3) bis n : (n + 1,6) und ganz besonders bevorzugt n : (n + 1,3) bis n : (n + 1,5), wobei n die Stoffmenge der Dicarbonsäure bezeichnet.

Die Herstellung des alpha,omega-hydroxyfunktionalisierten Oligoesters erfolgt in einer dem Fachmann geläufigen Art und Weise. Um eine quantitative Umsetzung der eingesetzten Edukte zu erzielen, muss das bei der Reaktion entstehende Wasser aus dem chemischen Gleichgewicht entzogen werden. Dies geschieht vornehmlich durch den Einsatz eines Wasserabscheiders. Der alpha,omega-hydroxyfunktionalisierte Oligoester ist folglich ein Polykondensationsprodukt.

Demnach handelt es sich bei dem alpha,omega-hydroxyfunktionalisierten Oligoester um ein Gemisch aus entsprechenden Oligoestern unterschiedlicher Kettenlänge.

In einer bevorzugten Ausführungsform des erfindungsgemäß einzusetzenden alpha,omega-hydroxyfunktionalisierten Oligoesters wird zu dessen Herstellung mindestens eine gesättigte lineare aliphatische Dicarbonsäure, mindestens eine einfach ungesättigte lineare aliphatische Dicarbonsäure und mindestens ein gesättigtes aliphatisches Diol eingesetzt. Bevorzugt handelt es sich bei der einzusetzenden gesättigten linearen aliphatischen Dicarbonsäure um eine lineare Alkandisäure mit 4 bis 18, besonders bevorzugt 6 bis 14 und ganz besonders bevorzugt 6 bis 10 Kohlenstoffatomen. Bei der einfach ungesättigten linearen Dicarbonsäure handelt es sich bevorzugt um eine einfach ungesättigte lineare Alkendisäure mit 4 bis 10, besonders bevorzugt 4 bis 8 und ganz besonders bevorzugt 4 bis 6 Kohlenstoffatomen. Bei dem gesättigten aliphatischen Diol handelt es sich bevorzugt um gesättigte lineare Alkandiole mit 4 bis 18, besonders bevorzugt 6 bis 14 und ganz besonders bevorzugt 6 bis 10 Kohlenstoffatomen oder ebenfalls bevorzugt um gesättigte Cycloalkandiole mit 6 bis 18, besonders bevorzugt 6 bis 14 und ganz besonders bevorzugt 6 bis 10 Kohlenstoffatomen.

Darüber hinaus lassen sich bei der Herstellung des alpha,omega-hydroxyfunktionalisierten Oligoesters natürlich auch Triole und monohydroxyfunktionelle Verbindungen einsetzen. Beispielsweise können aliphatische Triole sowie aliphatische monohydroxyfunktionelle Verbindungen eingesetzt werden. Bevorzugt handelt es sich dabei um entsprechende aliphatische Kohlenwasserstoffverbindungen. Als Beispiel für ein Triol sei Trimethylolpropan genannt. Als monohydroxyfunktionelle Verbindungen kann beispielsweise Dodecanol eingesetzt werden.

In einer weiteren bevorzugten Ausführungsform besitzt der alpha,omega-hydroxyfunktionalisierte Oligoester die folgende Strukturformel (I):

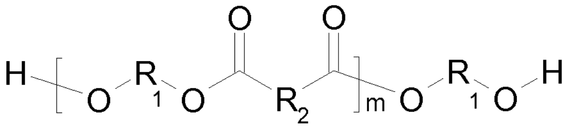

(I)

wobei

- die Reste $R_1$ unabhängig voneinander ausgewählt sind aus der Gruppe der linearen oder cyclischen Alkylenreste,
- die Reste $R_2$ unabhängig voneinander ausgewählt sind aus der Gruppe der Alkylen- oder Alkenylenreste, wobei das Verhältnis von Alkylen- zu Alkenylenresten gerade so gewählt ist, dass der alpha,omega-hydroxyfunktionalisierte Oligoester der Strukturformel (I) einen theoretischen Kohlenstoff-Kohlenstoff-Doppelbindungsgehalt von 1 bis 2,5 mmol/g besitzt,
- der Index m so gewählt ist, dass das zahlenmittlere Molekulargewicht des alpha,omega-hydroxyfunktionalisierten Oligoesters der Strukturformel (I) 1000 bis 3000 g/mol beträgt.

Bei dem Index m in der Strukturformel (I) handelt es sich um eine ganze Zahl, welche größer als Null ist.

Die Voraussetzung, dass der Index m so gewählt werde, dass das zahlenmittlere Molekulargewicht des alpha,omega-hydroxyfunktionalisierten Oligoesters der Strukturformel (I) 1000 bis 3000 g/mol betrage sei im Folgenden erklärt. Es soll angenommen werden, dass es sich bei allen Resten $R_1$ um einen Hexamethylenrest und bei der Hälfte aller m Reste $R_2$ jeweils um einen Tetramethylenrest und bei der anderen Hälfte jeweils um einen Rest der Formel -CH=CH- handelt. Beträgt das zahlenmittlere Molekulargewicht beispielsweise 1500 g/mol, so liegt m im Mittel zwischen 6 und 7.

Das zahlenmittlere Molekulargewicht des alpha,omega-hydroxyfunktionalisierten Oligoesters der Strukturformel (I) beträgt bevorzugt 1000 bis 2000 g/mol und besonders bevorzugt 1200 bis 1800 g/mol.

Das gewichtsmittlere Molekulargewicht des alpha,omega-hydroxyfunktionalisierten Oligoesters der Strukturformel (I) beträgt bevorzugt 3000 bis 8000 g/mol und besonders bevorzugt 3000 bis 6000 g/mol.

Der alpha,omega-hydroxyfunktionalisierte Oligoester der Strukturformel (I) besitzt bevorzugt eine OH-Zahl von 40 bis 160 mg KOH/g und besonders bevorzugt von 70 bis 150 mg KOH/g.

Der alpha,omega-hydroxyfunktionalisierte Oligoester der Strukturformel (I) besitzt bevorzugt einen theoretischen Kohlenstoff-Kohlenstoff-Doppelbindungsgehalt von 1,5 bis 2 mmol/g und besonders bevorzugt von 1,6 bis 1,9 mmol/g.

Der alpha,omega-hydroxyfunktionalisierte Oligoester der Strukturformel (I) besitzt bevorzugt eine Säurezahl von 0 bis 10 mg KOH/g, besonders bevorzugt von 0 bis 5 mg KOH/g und ganz besonders bevorzugt von 0 bis 3 mg KOH/g. Theoretisch beträgt die Säurezahl des alpha,omega-hydroxyfunktionalisierten Oligoesters der Strukturformel (I) 0 mg KOH/g. Wird dieser aus entsprechenden Diolen sowie entsprechenden Dicarbonsäuren beziehungsweise deren Anhydriden hergestellt, so ist es grundsätzlich möglich, dass Carbonsäuregruppe vorliegen, welche nicht mit einem entsprechenden Diol reagiert haben. In einem solchen Fall, hätte das resultierende Produktgemisch eine Säurezahl von > 0 mg KOH/g. Gemäß den oben genannten Bereichen für die Säurezahl ist es bevorzugt, wenn das resultierende Reaktionsgemisch möglichst wenig Carbonsäuregruppen besitzt.

Die Reste $R_1$ sind unabhängig voneinander ausgewählt aus der Gruppe der linearen oder cyclischen Alkylenreste. Ist mehr als eine Art von Resten $R_1$ im alpha,omega-hydroxyfunktionalisierten Oligoester der Strukturformel (I) vorhanden, so ist deren Anordnung statistisch. Im Fall eines linearen Alkylenrestes enthält dieser bevorzugt 4 bis 18, besonders bevorzugt 6 bis 14 und ganz besonders bevorzugt 6 bis 10 Kohlenstoffatome. Ganz besonders bevorzugt handelt es sich hier um einen Hexamethylenrest. Im Falle eines cyclischen Alkylenrests enthält dieser bevorzugt 6 bis 18, besonders bevorzugt 6 bis 14 und ganz besonders bevorzugt 6 bis 10 Kohlenstoffatome. Ganz besonders bevorzugt handelt es sich hier um einen Tricyclodecanrest.

Die Reste $R_2$ sind unabhängig voneinander ausgewählt aus der Gruppe der Alkylen- oder Alkenylenreste, wobei das Verhältnis von Alkylen- zu Alkenylenresten gerade so gewählt ist, dass der alpha,omega-hydroxyfunktionalisierte Oligoester der Strukturformel (I) einen theoretischen Kohlenstoff-Kohlenstoff-Doppelbindungsgehalt von 1 bis 2,5 mmol/g, bevorzugt von 1,5 bis 2 mmol/g und ganz besonders bevorzugt von 1,6 bis 1,9 mmol/g besitzt. Die Anordnung der unterschiedlichen Arten von Resten $R_2$ im alpha,omega-hydroxyfunktionalisierten Oligoester der Strukturformel (I) ist statistisch.

Bei $R_2$ handelt es sich bevorzugt entweder um einen linearen Alkylen- oder einen linearen Alkenylenrest. Es ist ebenfalls bevorzugt, dass das molare Verhältnis zwischen den Alkylen- und den Alkenylenresten 0,5 : 1,5 bis 1,5 : 0,5, besonders bevorzugt 0,75 : 1,25 bis 1,25 zu 0,75 und ganz besonders bevorzugt 0,9 : 1,1 bis 1,1 : 0,9 beträgt.

Ist $R_2$ ein linearer Alkylenrest, so enthält dieser bevorzugt 2 bis 16, besonders bevorzugt 4 bis 12 uns ganz besonders bevorzugt 4 bis 8 Kohlenstoffatome. Beispielsweise handelt es sich um einen Tetramethylenrest.

$R_2$ kann weiterhin ein linearer Alkenylenrest sein. Bevorzugt handelt es sich um einen einfach ungesättigten linearen Alkenylenrest, welcher bevorzugt 2 bis 8, besonders bevorzugt 2 bis 6 und ganz besonders bevorzugt 2 bis 4 Kohlenstoffatome enthält. Ganz besonders bevorzugt handelt es sich um einen Alkenylenrest der Struktur -CH=CH-.

**Beschreibung des Alkoxysilans der Strukturformel (II)**

Unter einem aliphatischen Rest R ist ein organischer Rest zu verstehen, welcher keine aromatischen Gruppen wie beispielsweise einen Phenylrest besitzt. Der aliphatische Rest R kann 2 bis 12 Kohlenstoffatome aufweisen. Unter einem cycloaliphatischen Rest R ist ein organischer Rest zu verstehen, welcher keine aromatischen Gruppen wie beispielsweise einen Phenylrest besitzt. Der cycloaliphatische Rest R kann 3 bis 12 Kohlenstoffatome aufweisen wie beispielsweise im Fall von Cyclopropyl oder Cyclohexyl. Unter einem aromatischen Rest R ist ein organischer Rest zu verstehen, welcher aus aromatischen Gruppen aufgebaut ist, wie beispielsweise einen Phenylen-Rest. Der aromatische Rest R kann 6 bis 12 Kohlenstoffatome aufweisen. Unter einem araliphatischen Rest R ist ein organischer Rest zu verstehen, welcher sowohl aromatische Gruppen als auch aliphatische Gruppen aufweist. Der araliphatische Rest R kann 7 bis 18 Kohlenstoffatome aufweisen. Ein Rest R wie ein aliphatischer Rest R kann neben Kohlenstoff und Wasserstoff auch Heteroatome, wie Sauerstoff, Stickstoff oder Schwefel enthalten. Daneben können jeweils ebenfalls weitere funktionelle Gruppen wie Ester- oder Urethangruppen enthalten sein. Des Weiteren kann der Rest R ebenfalls Alken- oder Alkingruppen enthalten. Er kann ebenfalls mehrfach ungesättigt sein beziehungsweise mehr als eine Alkingruppe enthalten. Es handelt sich bei R besonders bevorzugt um einen aliphatischen Rest mit 2 bis 12 Kohlenstoffatomen oder mit 2 bis 10 Kohlenstoffatomen, ganz besonders bevorzugt 2 bis 8 Kohlenstoffatomen und ganz insbesondere 2 bis 6 Kohlenstoffatomen. Dem Fachmann ist klar, dass es sich bei dem Rest R um einen zweibindigen Rest handelt.

Bei dem Rest R' handelt es sich bevorzugt um einen $C_2$- bis $C_{10}$-Alkylenrest, besonders bevorzugt um einen $C_2$- bis $C_8$-Alkylenrest und ganz besonders bevorzugt um einen $C_3$- bis $C_6$-Alkylenrest.

Bei der OH-reaktiven funktionellen Gruppe A handelt es sich um eine Isocyanatgruppe oder eine Epoxidgruppe. Bevorzugt handelt es sich um eine Isocyanatgruppe.

Bevorzugt werden Alkoxysilane der allgemeinen Strukturformel (II.1) eingesetzt

$$OCN\text{-}R_1\text{-}Si(R')_x(OR'')_{3-x}$$

wobei

- $R_1$ ein $C_2$- bis $C_{12}$-Alkylenrest, ein $C_2$- bis $C_{12}$-Alkenylenrest oder ein mehrfach ungesättigter $C_4$- bis $C_{12}$-Alkylenrest ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt.

Bevorzugt handelt es sich bei $R_1$ um einen $C_2$- bis $C_{12}$-Alkylenrest oder sogar um einen $C_2$- bis $C_{10}$-Alkylenrest. Besonders bevorzugt handelt es sich um einen $C_2$- bis $C_8$-Alkylenrest und ganz besonders bevorzugt um einen $C_2$- bis $C_6$-Alkylenrest oder einen $C_3$-Alkylenrest. Betreffend den Rest R' sei auf die oben genannten bevorzugten, besonders bevorzugten und ganz besonders bevorzugten Merkmale verwiesen. Des Weiteren ist bevorzugt x = 0 oder 1 und ganz besonders bevorzugt x = 0.

Ebenfalls bevorzugt werden Alkoxysilane der allgemeinen Strukturformel (II.2) eingesetzt

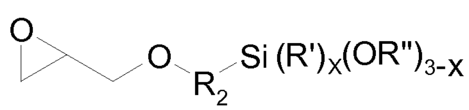

wobei

- $R_2$ ein $C_2$- bis $C_{10}$-Alkylenrest, ein $C_2$- bis $C_{10}$-Alkenylenrest oder ein mehrfach ungesättigter $C_4$- bis $C_{10}$-Alkylenrest ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt.

Bevorzugt handelt es sich bei $R_2$ um einen $C_2$- bis $C_{10}$-Alkylenrest oder sogar um einen $C_2$- bis $C_8$-Alkylenrest.

Besonders bevorzugt handelt es sich um einen $C_2$- bis $C_6$-Alkylenrest und ganz besonders bevorzugt um einen $C_2$- bis $C_4$-Alkylenrest oder einen $C_3$-Alkylenrest. Betreffend den Rest R' sei auf die oben genannten bevorzugten, besonders bevorzugten und ganz besonders bevorzugten Merkmale verwiesen. Des Weiteren ist bevorzugt x = 0 oder 1 und ganz besonders bevorzugt x = 0.

Ebenfalls bevorzugt werden Alkoxysilane der allgemeinen Strukturformel (II.3) eingesetzt

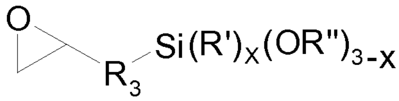

wobei

- $R_3$ ein $C_2$- bis $C_{12}$-Alkylenrest, ein $C_2$- bis $C_{12}$-Alkenylenrest oder ein mehrfach ungesättigter $C_4$- bis $C_{12}$-Alkylenrest ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt.

Bevorzugt handelt es sich bei $R_3$ um einen $C_2$- bis $C_{12}$-Alkylenrest oder sogar um einen $C_2$- bis $C_{10}$-Alkylenrest. Besonders bevorzugt handelt es sich um einen $C_2$- bis $C_8$-Alkylenrest und ganz besonders bevorzugt um einen $C_2$- bis $C_6$-Alkylenrest oder einen $C_3$-Alkylenrest. Betreffend den Rest R' sei auf die oben genannten bevorzugten, besonders bevorzugten und ganz besonders bevorzugten Merkmale verwiesen. Des Weiteren ist bevorzugt x = 0 oder 1 und ganz besonders bevorzugt x = 0.

**Herstellung des erfindungsgemäßen Additivs**

Das erfindungsgemäße Additiv wird beispielsweise durch Umsetzung mindestens eines alpha,omega-hydroxyfunktionalisierten Oligoesters mit mindestens einem Alkoxysilan der Strukturformel (II) hergestellt. Die Reaktion wird in organischen Lösemitteln durchgeführt. Als Lösemittel eignen sich alle dem Fachmann bekannten Lösemittel, welche kein aktives H-Atom aufweisen. Beispiele für geeignete Lösemittel sind Ester wie Butylacetat oder Naphtha. Gegebenenfalls kann die Umsetzung in Gegenwart wenigstens eines Wasserfängers wie beispielsweise Triethylorthoformiat durchgeführt werden. Bevorzugt wird dabei zunächst das Alkoxysilan der Strukturformel (II) vorgelegt und anschließend der alpha,omega-hydroxyfunktionalisierte Oligoester hinzugetropft. Handelt es sich bei A um eine Isocyanatgruppe, so kann die Menge an noch vorhandenen Isocyanatgruppen in der Reaktionslösung titrimetrisch bestimmt werden, beispielsweise gemäß DIN EN ISO 11909 (Datum: Mai 2007). Handelt es sich bei A um eine Epoxidgruppe, so kann die Menge an noch vorhandenen Epoxidgruppen in der Reaktionslösung titrimetrisch bestimmt werden, beispielsweise gemäß DIN EN ISO 3001 (Datum: November 1999).

In einer besonders bevorzugten Ausführungsform des erfindungsgemäßen Additivs wird dieses durch die Umsetzung mindestens eines alpha,omega-hydroxyfunktionalisierten Oligoesters der Strukturformel (I) mit mindestens einem Alkoxysilan der Strukturformel (II.1) hergestellt.

Weitere besonders bevorzugte Ausführungsformen des erfindungsgemäßen Additivs werden im Folgenden genannt:

a) In einer besonders bevorzugten Ausführungsform des erfindungsgemäßen Additivs besitzt der alpha,omega-hydroxyfunktionalisierte Oligoester der Strukturformel (I) ein zahlenmittleres Molekulargewicht von 1200 bis 1800 g/mol.

b) In einer weiteren besonders bevorzugten Ausführungsform des erfindungsgemäßen Additivs besitzt der alpha,omega-hydroxyfunktionalisierten Oligoester der Strukturformel (I) ein gewichtsmittleres Molekulargewicht von 3000 bis 6000 g/mol.

c) In einer weiteren besonders bevorzugten Ausführungsform des erfindungsgemäßen Additivs besitzt der alpha,omega-hydroxyfunktionalisierte Oligoester der Strukturformel (I) eine OH-Zahl von 70 bis 150 mg KOH/g.

d) In einer weiteren besonders bevorzugten Ausführungsform des erfindungsgemäßen Additivs besitzt der alpha,omega-hydroxyfunktionalisierte Oligoester der Strukturformel (I) einen theoretischen Kohlenstoff-Kohlenstoff-Doppelbindungsgehalt von 1,5 bis 2 mmol/g.

e) In einer weiteren besonders bevorzugten Ausführungsform des erfindungsgemäßen Additivs sind die Reste $R_1$ im alpha,omega-hydroxyfunktionalisierten Oligoester der Strukturformel (I) ausgewählt aus der Gruppe der linearen Alkylenreste mit 6 bis 10 Kohlenstoffatomen.

f) In einer weiteren besonders bevorzugten Ausführungsform des erfindungsgemäßen Additivs sind die Reste $R_2$ des alpha,omega-hydroxyfunktionalisierten Oligoesters der Strukturformel (I) ausgewählt aus der Gruppe der linearen Alkylenreste mit 4 bis 8 Kohlenstoffatomen oder der linearen Alkenylenreste mit 2 bis 4 Kohlenstoffatomen.

g) In einer weiteren besonders bevorzugten Ausführungsform des erfindungsgemäßen Additivs hinsichtlich des alpha,omega-hydroxyfunktionalisierten Oligoesters der Strukturformel (I) beträgt das molare Verhältnis zwischen den linearen Alkylen- und den linearen Alkenylenresten 0,9 : 1,1 bis 1,1 : 0,9.

h) In einer weiteren besonders bevorzugten Ausführungsform des erfindungsgemäßen Additivs handelt es sich bei dem Rest $R_1$ des Alkoxysilans der Strukturformel (II.1) um eine $C_2$- bis $C_6$-Alkylenrest.

i) In einer weiteren besonders bevorzugten Ausführungsform des erfindungsgemäßen Additivs beträgt x im Alkoxysilans der Strukturformel (II.1) Null.

j) In einer weiteren besonders bevorzugten Ausführungsform des erfindungsgemäßen Additivs werden mindestens 99 mol-% aller OH-Gruppen des alpha,omega-hydroxyfunktionalisierten Oligoesters mit einer OH-reaktiven funktionellen Gruppe A des erfindungsgemäßen Alkoxysilans zur Reaktion gebracht.

In einer ganz besonders bevorzugten Ausführungsform des erfindungsgemäßen alpha,omega-hydroxyfunktionalisierten Oligoesters sind alle die unter a) bis j) angegebenen Merkmale in Kombination realisiert.

**Beschreibung des lösemittelbasierten Füllers**

Es ist erfindungswesentlich, dass der lösemittelbasierte Füller mindestens ein erfindungsgemäßes Additiv enthält. Dabei beträgt die Summe über die gewichtsprozentualen Anteile aller erfindungsgemäßer Additive 1,5 bis 10 Gew.-% bezogen auf die Gesamtmenge des lösemittelbasierten Füllers. Bevorzugt beträgt die Summe über die gewichtsprozentualen Anteile aller erfindungsgemäßen Additive 1,5 bis 9 Gew.-%, besonders bevorzugt 1,5 bis 8 Gew.-% und ganz besonders bevorzugt 1,5 bis 7,5 Gew.-% oder sogar 1,5 bis 6,5 Gew.-% jeweils bezogen auf das Gesamtgewicht des Füllers.

Wird eine Untergrenze von 0,5 Gew.-% unterschritten, so wird die Haftung nicht verbessert. Wird die Obergrenze von 10 Gew.-% überschritten, so treten Nachteile wie beispielsweise eine Vergilbung der resultierenden Beschichtung auf.

In dem erfindungsgemäßen lösemittelbasierten Füller beträgt die Summe über die gewichtsprozentualen Anteile der erfindungsgemäßen Additive 1,5 bis 10 Gew.-% bezogen auf die Gesamtmenge des lösemittelbasierten Füllers. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 1,5 bis 10 Gew.-% bezogen auf die Gesamtmenge des lösemittelbasierten Füllers. Besonders bevorzugt enthält der erfindungsgemäße Füller als entsprechende Additive ausschließlich bevorzugte Ausführungsformen der Additive.

In einer bevorzugten Ausführungsform des erfindungsgemäßen lösemittelbasierten Füllers beträgt die Summe über die gewichtsprozentualen Anteile der erfindungsgemäßen Additive 1,5 bis 9 Gew.-% bezogen auf die Gesamtmenge des lösemittelbasierten Füllers. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 1,5 bis 9 Gew.-% bezogen auf die Gesamtmenge des lösemittelbasierten Füllers. Besonders bevorzugt enthält der erfindungsgemäße Füller als entsprechende Additive ausschließlich bevorzugte Ausführungsformen der Additive.

In einer besonders bevorzugten Ausführungsform des erfindungsgemäßen lösemittelbasierten Füllers beträgt die Summe über die gewichtsprozentualen Anteile der erfindungsgemäßen Additive 1,5 bis 8 Gew.-% bezogen auf die Gesamtmenge des lösemittelbasierten Füllers. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 1,5 bis 8 Gew.-% bezogen auf die Gesamtmenge des lösemittelbasierten Füllers. Besonders bevorzugt enthält der erfindungsgemäße Füller als entsprechende Additive ausschließlich bevorzugte Ausführungsformen der Additive.

In einer ganz besonders bevorzugten Ausführungsform des erfindungsgemäßen lösemittelbasierten Füllers beträgt die Summe über die gewichtsprozentualen Anteile der erfindungsgemäßen Additive 1,5 bis 7,5 Gew.-% bezogen auf die Gesamtmenge des lösemittelbasierten Füllers. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 1,5 bis 7,5 Gew.-% bezogen auf die Gesamtmenge des lösemittelbasierten Füllers. Besonders bevorzugt enthält der erfindungsgemäße Füller als entsprechende Additive ausschließlich bevorzugte Ausführungsformen der Additive.

In einer ebenfalls ganz besonders bevorzugten Ausführungsform des erfindungsgemäßen lösemittelbasierten Füllers beträgt die Summe über die gewichtsprozentualen Anteile der erfindungsgemäßen Additive 1,5 bis 6,5 Gew.-% bezogen auf die Gesamtmenge des lösemittelbasierten Füllers. Für den Fall, dass bevorzugte Ausführungsformen der

erfindungsgemäßen Additive eingesetzt werden, beträgt die Summe über die gewichtsprozentualen Anteile aller bevorzugten Ausführungsformen des Additivs bevorzugt ebenfalls 1,5 bis 6,5 Gew.-% bezogen auf die Gesamtmenge des lösemittelbasierten Füllers. Besonders bevorzugt enthält der erfindungsgemäße Füller als entsprechende Additive ausschließlich bevorzugte Ausführungsformen der Additive.

Beispiele für in diesem Sinne bevorzugte Ausführungsformen des erfindungsgemäßen Additivs sind jene, welche bereits im Zusammenhang mit der Beschreibung des erfindungsgemäßen Additivs genannt wurden.

Der Festkörpergehalt des Füllers kann bestimmt werden, indem ca. 2 g Probe in eine vorher getrocknete Aluminiumschale eingewogen und 60 Minuten bei 125 °C im Trockenschrank getrocknet, im Exsikkator abgekühlt, und dann zurückgewogen werden. Der Rückstand bezogen auf die Gesamtmenge der eingesetzten Probe entspricht dem Festkörperanteil. Die Bestimmung des Festkörpers erfolgte nach DIN EN ISO 3251 (Datum: Juni 2008) (1-2 g über die Dauer von 1h bei 125°C).

Es können die dem Fachmann geläufigen lösemittelbasierten Füller eingesetzt werden. Der Füller enthält mindestens ein organisches Polymer als Bindemittel. Diese organischen Polymere sind beispielsweise die dem Fachmann bekannten Polyester- und/oder Polyacrylat- und Polymethacrylatharze (im Folgenden als Poly(meth)acrylatharze bezeichnet). Die genannten organischen Polymere enthalten vorzugsweise zusätzlich unterschiedliche funktionelle Gruppen zur chemischen Vernetzung, wobei Hydroxylgruppen bevorzugt sind. Bevorzugt werden Polyester- und/oder Poly(meth)acrylatharze, welche bevorzugt Hydroxylgruppen enthalten, als Bindemittel eingesetzt. Solche organischen Polymere beziehungsweise Harze werden beispielsweise im Römpp-Lexikon Lacke und Druckfarben, Georg Thieme Verlag, Stuttgart, New York, 1998, Seiten 73 bis 74, beschrieben. Polyester ergeben besonders flexible Füller. Poly(meth)acrylatharze werden bevorzugt, weil sie schneller physikalisch trocknen und letztlich eine frühere Bearbeitung zulassen. Daneben können auch noch Epoxidharze eingesetzt werden. Diese werden beispielsweise im Römpp-Lexikon Lacke und Druckfarben, Georg Thieme Verlag, Stuttgart, New York, 1998, Seiten 196 bis 197, beschrieben. Ein in diesem Sinne bevorzugt einzusetzendes Epoxidharz ist Epikote 1001. Als Vernetzer können Polyisocyanataddukte eingesetzt werden. Als Polyisocyanataddukte werden wegen ihrer niedrigen Viskosität und der besseren Wetterbeständigkeit aliphatische und auch cycloaliphatische Polyisocyanataddukte verwendet. Das sind Produkte, die auch bei den Zweikomponenten-Klarlacken der Automobil-Serienlackierung eingesetzt werden. Bei den eingesetzten Polyisocyanataddukten handelt es sich üblicherweise um Oligomere aus Diisocyanaten. Basis für die Polyisocyanataddukte sind beispielsweise Hexamethylendiisocyanat (HMDI), Isophorondiisocyanat (IPDI), Diphenylmethandiisocyanat (MDI) und Tetramethylxylyldiisocyanat (TMXDI).

Daneben können aber auch alle gängigen dem Fachmann bekannten Diisocyanate eingesetzt werden. Die Verfahren zur Oligomerisierung bestehen in der Bildung verschiedener Addukte: Urethanen, Allophananten, Biureten, Uretdionen und bevorzugt Isocyanuraten. Besonders bevorzugt werden wegen ihrer Viskosität Isocyanurattrimere des Hexamethylendiisocyanats eingesetzt.

Vorteilhafterweise liegt der Anteil aller filmbildenden Komponenten, insbesondere des hydroxyfunktionellen Polyester- und/oder Poly(meth)acrylatharzes und des Polyisocyanataddukts als Vernetzers im Bereichen von 10 bis 90 Gew.-%, bevorzugt von 15 bis 60 Gew.-%, besonders bevorzugt im Bereich von 20 bis 50 Gew.-%, jeweils bezogen auf die Gesamtmenge des lösemittelbasierten Füllers. Der Anteil eines jeweils separat betrachteten Harzes als Bindemittel sowie eines Vernetzers liegt vorteilhafterweise nicht unter 3 Gew.-%, bezogen auf die Gesamtmenge des lösemittelbasierten Füllers.

Üblicherweise ist es erforderlich, die Vernetzungsreaktion zu katalysieren. Dafür werden fast immer organische Zinnsalze verwendet. Im Sinne der vorliegenden Erfindung wird bevorzugt Dibutylzinndilaurat eingesetzt, da es aufgrund seines relativ langkettigen Säurerests besonders gut mit dem Bindemittel und dann später mit der Filmmatrix verträglich ist.

Die Pigmentierung der Füller besteht üblicherweise aus Titandioxid, Eisenoxidpigment und Ruß. Daneben sind geeignete Füllstoffe vorhanden. Als Füllstoffe können die üblichen in der Lackindustrie einsetzbaren Füllstoffe verwendet werden. Füllstoffe werden beispielsweise im Römpp-Lexikon Lacke und Druckfarben, Georg Thieme Verlag, Stuttgart, New York, 1998, Seiten 250 bis 252, beschrieben. Daneben werden üblicherweise Korrosionsinhibitoren wie beispielsweise Silicate, Orthophosphate und Polyphosphate eingesetzt. Es werden nur für spezielle Fälle farbige Füller hergestellt, die den geplanten Farbton für die Decklackierung unterstützen. Normalerweise haben die Füller verschiedene Grautöne, die durch Anteile an Pigmentrußen und Eisenoxiden (meistens Eisenoxidgelb) erzeugt werden.

Des Weiteren enthält der erfindungsgemäße Füller organische Lösemittel. Enthalten sein können beispielsweise aliphatische und/oder aromatische Kohlenwasserstoffe wie Toluol, Xylol, Solventnaphtha, Solvesso 100, Shellsol A, Ketone, wie Aceton, Methylethylketon oder Methylamylketon, Ester, wie Ethylacetat, Butylacetat, Methoxypropylacetat, Butylglykolacetat, Pentylacetat oder Ethylethoxypropionat, Ether wie Butylglycol, Dipropylenglycolmethylether, Alkohole wie Ethylhexanol, Butoxypropanol, Isopropanol oder Butyldiglycol oder Mischungen aus den vorgenannten Lösemitteln.

Des Weiteren handelt es sich um einen lösemittelbasierten Füller. Unter dem Begriff "lösemittelbasiert" soll im Folgenden verstanden werden, dass als Lösemittel ausschließlich organische Lösemittel und kein Wasser eingesetzt

wird. Insbesondere soll der Wassergehalt des erfindungsgemäßen lösemittelbasierten Füllers nicht größer als 5 Gew.-%, und ganz besonders nicht größer als 2 Gew.-% jeweils bezogen auf die Gesamtmenge des erfindungsgemäßen lösemittelbasierten Füllers betragen.

Weiterhin kann in dem Füller mindestens ein an sich bekanntes Lackadditiv enthalten sein. Solche Lackadditive sind beispielsweise, aber nicht ausschließlich,

- Entschäumer,
- Polymerisationsinhibitoren,
- Slipadditive,
- Netzmittel wie Siloxane, fluorhaltige Verbindungen, Carbonsäurehalbester
- Verlaufmittel,
- rheologiesteuernde Additive,
- Dispergiermittel,
- Korrosionsschutzmittel,
- und/oder Flammschutzmittel.

**Beschreibung des erfindungsgemäßen Verfahrens**

Die vorliegende Erfindung betrifft weiterhin ein Verfahren zur Herstellung einer Mehrschichtlackierung auf einem Substrat umfassend

(A) Aufbringen des erfindungsgemäßen Füllers,
(B) Aufbringen eines weiteren Lacks.

Alle oben hinsichtlich des erfindungsgemäßen lösemittelbasierten Füllers bereits diskutierten besonderen Merkmale sind ebenfalls für das in Rede stehende erfindungsgemäße Verfahren bevorzugt.

Eine bevorzugte Ausführungsform des erfindungsgemäßen Verfahrens ist dadurch gekennzeichnet, dass

i. die in Schritt (A) erhaltene Füllerschicht getrocknet wird,
ii. der Lack gemäß Schritt (B) ein Decklack ist, und
iii. die getrocknete Füllerschicht und die in Schritt (B) erhaltene Decklackschicht gemeinsam gehärtet werden.

Die vorliegende Erfindung betrifft ebenfalls eine Mehrschichtlackierung, welche nach dieser bevorzugten Ausführungsform des erfindungsgemäßen Verfahrens herstellbar ist. Alle hinsichtlich des erfindungsgemäßen lösemittelbasierten Füllers sowie dieser bevorzugten Ausführungsform des erfindungsgemäßen Verfahrens diskutierten besonderen Merkmale sind ebenfalls für die Mehrschichtlackierung bevorzugt.

Unter Trockenen im Sinne von Punkt i. ist die Abgabe von Lösemitteln zu verstehen. Unter welchen Bedingungen dies erfolgen kann wird weiter unten im Text für die jeweiligen Schichten beschrieben. Unter Härten im Sinne des Punktes iii. ist die thermische Härtung zu verstehen. Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Unter welchen Bedingungen die thermische Härtung erfolgen kann wird weiter unten im Text für die jeweiligen Schichten beschrieben.

Dieses Verfahrens wird bevorzugt zur Lackierung von Nutzfahrzeugen eingesetzt. Geeignete Substrate sind daher insbesondere Metallsubstrate. Metallsubstrate sind alle dem Fachmann geläufigen wie beispielsweise Aluminium, Eisen, Zink und Magnesium sowie deren Legierungen. Besonders bevorzugt sind Substrate aus Aluminium oder Stahl.

Je nach Material können die Metallsubstrate noch mit einer Elektrotauchlackierung versehen werden; beispielsweise im Fall von Stahl. Wird hingegen ein Aluminiumsubstrat verwendet, so wird dieses vorzugweise nicht mit einer Elektrotauchlackierung versehen, sondern vor der Applikation des Füllers abgeschliffen. Neben metallischen Substraten können auch alle üblichen dem Fachmann bekannten thermo- oder duroplastischen Kunststoffsubstrate beschichtet werden.

**Decklack**

Es können die dem Fachmann geläufigen lösemittelbasierten Decklacke eingesetzt werden. Der Decklack enthält mindestens ein organisches Polymer als Bindemittel. Diese organischen Polymere sind beispielsweise die dem Fachmann bekannten Polyester- und/oder Polyacrylat- und Polymethacrylatharze (im Folgenden als Poly(meth)acrylatharze bezeichnet). Die genannten organischen Polymere als Bindemittel enthalten vorzugsweise zusätzlich unterschiedliche funktionelle Gruppen zur chemischen Vernetzung, wobei Hydroxygruppen bevorzugt sind. Bevorzugt werden Poly(meth)acrylatharze eingesetzt, aufgrund ihrer gegenüber Polyestern deutlich besseren Antrocknungsgeschwindigkeit. Besonders bevorzugt werden Poly(meth)acrylatharze eingesetzt, welche mit Glycidylestern verzweigter gesättigter Fettsäuren modifiziert sind. Hierdurch wird ihr Pigmentaufnahmevermögen gesteigert. Als Vernetzer werden niedrigviskose aliphatische Polyisocyanataddukte eingesetzt, welche bereits in Zusammenhang mit der Beschreibung des erfindungsgemäßen lösemitttelbasierten Füllers diskutiert wurden. Ganz besonders bevorzugt werden hier ebenfalls Isocyanurattrimere des Hexamethylendiisocyanats eingesetzt.

Üblicherweise ist es erforderlich, die Vernetzungsreaktion zu katalysieren. Dafür werden bevorzugt organische Zinnsalze verwendet. Im Sinne der vorliegenden Erfindung wird besonders bevorzugt Dibutylzinndilaurat (DBTL) eingesetzt, da es aufgrund seines relativ langkettigen Säurerests besonders gut mit dem Bindemittel und dann später mit der Filmmatrix verträglich ist.

Des Weiteren enthält der Decklack mindestens ein übliches und bekanntes farbgebendes und/oder effektgebendes Pigment. Als Pigmente können prinzipiell dieselben ausgewählt werden, die der Fachmann auch für die Automobilserienlackierung verwendet.

Beispiele für solche Pigmente sind Pigmente auf anorganischer Basis, wie beispielsweise Titandioxid, Eisenoxid und Ruß oder auch übliche Metallpigmente (beispielsweise handelsübliche Aluminiumbronzen, Edelstahlbronzen) und nichtmetallische Effektpigmente (beispielsweise Perlglanz- beziehungsweise Interferenzpigmente). Auch farbgebende Pigmente auf organischer Basis wie Azopigmente und Phthalocyaninpigmente können zum Einsatz kommen.

Als Lösemittel können all jene verwendet werden, welche oben bereits in Zusammenhang mit dem erfindungsgemäßen lösemittelbasierten Füller genannt worden sind.

**Applikation des Füllers und des Decklacks**

Üblicherweise liegen vor der Applikation des Füllers jeweils eine Härter-, eine Füller- und eine Verdünnungskomponente vor. Dabei enthält die Härterkomponente das Vernetzungsmittel, die Füllerkomponente das Bindemittel sowie entsprechende Pigmente und Füllstoffe und die Verdünnungskomponente entsprechende Lösemittel. Das erfindungsgemäße Additiv kann sich entweder in der Füllerkomponente oder im Verdünner befinden. Kurz vor der Applikation werden diese drei Komponenten in einem dem Fachmann geläufigen Verhältnis miteinander gemischt und der resultierende Füller appliziert. Es können grundsätzlich alle üblichen Applikationsmethoden wie beispielsweise Spritzen, Rakeln, Streichen, Giessen, Tauchen, Tränken, Träufeln oder Walzen eingesetzt werden. Bevorzugt ist die Spritzapplikation. Dabei kann das zu beschichtende Substrat als solches ruhen, wobei die Applikationseinrichtung oder -anlage bewegt wird. Vorzugsweise werden Spritzapplikationsmethoden angewandt, wie zum Beispiel Druckluftspritzen (pneumatische Applikation), Airless-Spritzen, Hochrotation, elektrostatischer Sprühauftrag (ESTA), gegebenenfalls verbunden mit Heissspritzapplikation wie zum Beispiel Hot-Air-Heissspritzen.

Die Applikation des erfindungsgemäßen lösemittelbasierten Füllers erfolgt in den üblichen und bekannten Schichtdicken, beispielsweise in Nassfilmschichtdicken von 70 bis 170 Mikrometer, vorzugsweise von 90 bis 150 Mikrometer. Die dabei resultierenden Trockenfilmschichtdicken nach der Härtung liegen dann beispielsweise im Bereich von 50 bis 80 Mikrometer, vorzugsweise im Bereich von 60 bis 70 Mikrometer.

Auf die applizierte Füllerschicht wird eine Decklackschicht aufgebracht. Bevorzugt wird die Füllerschicht vor der Applikation des Decklacks getrocknet. Dies kann beispielsweise bei Raumtemperatur (18 bis 23°C) für 5 bis 90 Minuten, bevorzugt 20 bis 80 Minuten und ganz besonders bevorzugt bei 30 bis 70 Minuten erfolgen.

Die generellen Applikationsmethoden des Decklacks entsprechen denen, wie sie weiter oben für den erfindungsgemäßen lösemittelbasierten Füller beschrieben wurden.

Die Applikation des Decklacks erfolgt in den üblichen und bekannten Schichtdicken, beispielsweise in Nassfilmschichtdicken von 50 bis 200 Mikrometer, vorzugsweise von 60 bis 150 Mikrometer. Die dabei resultierenden Trockenfilmschichtdicken nach der Härtung liegen dann beispielsweise im Bereich von 30 bis 90 Mikrometer, vorzugsweise im Bereich von 40 bis 70 Mikrometer.

Die Härtung von Füller und Decklack erfolgt gemeinsam. Diese weist keine methodischen Besonderheiten auf, sondern erfolgt nach den üblichen und bekannten Methoden wie beispielsweise Erhitzen in einem Umluftofen. So kann die Härtung zum Beispiel im Bereich der Raumtemperatur (18 bis 23°C) oder auch bei erhöhten Temperaturen im Bereich von beispielsweise 40°C bis 100°C, bevorzugt von 50°C bis 90°C erfolgen. Beispielsweise kann die Härtung über einen Zeitraum von 5 bis 120 Minuten, bevorzugt 10 bis 40 Minuten, erfolgen. Der Härtung kann gegebenenfalls auch eine

Ablüft- beziehungsweise Vortrocknungsphase vorausgehen, beispielsweise bei Raumtemperatur für eine Zeitdauer von 1 bis 60 Minuten.

Die mit Hilfe des erfindungsgemäßen lösemittelbasierten Füllers hergestellten Mehrschichtlackierungen weisen eine ausgezeichnete Haftung zwischen Füller- und Decklackschicht sowie zwischen Füller und Substrat auf. Eine Verbesserung der Haftung tritt ebenfalls auf, wenn das beschichtete Substrat beispielsweise einer Bewitterung ausgesetzt wurde. Unter einer Verbesserung der Haftung ist die Verbesserung gegenüber einem Füller zu verstehen, der kein erfindungsgemäßes Additiv enthält.

Die erfindungsgemäßen Füller eigen sich insbesondere für eine Anwendung in der Lackierung von Nutzfahrzeugen.

Eine ebenfalls bevorzugte Ausführungsform des erfindungsgemäßen Verfahrens ist dadurch gekennzeichnet, dass

i. auf das Substrat vor der Applikation des Füllers in Schritt (A) ein Primer aufgebracht wird und die resultierende Primerschicht getrocknet wird,

ii. die getrocknete Primerschicht und die in Schritt (A) erhaltene Füllerschicht gemeinsam gehärtet werden,

iii. der weitere Lack gemäß Schritt (B) ein Basislack ist, dieser auf die gehärtete Füllerschicht aufgetragen und anschließend getrocknet wird und

iv. auf die getrocknete Basislackschicht ein Klarlack aufgebracht wird und die getrocknete Basislackschicht sowie die resultierende Klarlackschicht gemeinsam gehärtet werden.

Was unter den Begriffen Trocknen und Härten zu verstehen ist, wurde bereits oben erklärt.

Die vorliegende Erfindung betrifft ebenfalls eine Mehrschichtlackierung, welche nach dieser bevorzugten Ausführungsform des erfindungsgemäßen Verfahrens herstellbar ist. Alle hinsichtlich des erfindungsgemäßen lösemittelbasierten Füllers sowie dieser bevorzugten Ausführungsform des erfindungsgemäßen Verfahrens diskutierten besonderen Merkmale sind ebenfalls für die Mehrschichtlackierung bevorzugt.

Es können dieselben Substrate wie oben bereits beschrieben eingesetzt werden. Besonders bevorzugt sind ebenfalls Substrate aus Aluminium oder Stahl.

Die Substrate können unbehandelt eingesetzt werden. Sie können aber auch vorher abgeschliffen werden. Insbesondere in der Automobilreparaturlackierung kann das Substrat durch Schleifen von der beschädigten Altlackierung befreit werden. Häufig wird aber die Altlackierung nur angeschliffen, ohne sie vollständig zu entfernen.

**Primer**

Die eingesetzten Primer bestehen üblicherweise aus Zweikomponentenmaterialien, die niedrigviskose Epoxidharze und Polyaminaddukte als Vernetzer enthalten. Primäre und sekundäre Amine reagieren bereits bei Raumtemperatur mit Epoxidgruppen, wodurch sekundäre beziehungsweise tertiäre Amine entstehen.

Typischerweise werden aromatische Epoxidharze eingesetzt. Diese werden bevorzugt aus Bisphenol A und Epichlorhydrin hergestellt. Vorzugsweise wird ein entsprechendes Epoxidharz aus der Umsetzung von einem Äquivalent Bisphenol A mit zwei Äquivalenten Epichlorhydrin dargestellt. Daneben ist der Einsatz von höhermolekularen aromatischen Epoxidharzen bevorzugt. Diese werden üblicherweise durch Umsetzung von Bisphenol-A-diglycidylether mit unterschiedlichen Mengen an Bisphenol A hergestellt.

Als Amine können Ethylendiamin, Propylendiamin, Diethylentriamin, Dipropylentriamin, Isophorondiamin und Bis-(4-amino-3-methyl-cyclohexyl)-methan eingesetzt werden. Darüber hinaus lassen sich aus Polyaminen auch oligomere Produkte erzeugen, die für die Vernetzung noch eine ausreichende Anzahl an freien Aminogruppen enthalten. Solche Aminaddukte bestehen üblicherweise aus einem Epoxidharz, welches mit einem Überschuss an Polyaminen umgesetzt wird; beispielsweise ein Addukt aus zwei Äquivalenten Diethylentriamin und einem Äquivalent Bisphenol-A-diglycidylether. Eine andere Gruppe von Vernetzern sind niedrigmolekulare Polyamide mit end- und seitenständigen freien primären oder sekundären Aminogruppen. Die Polyamide werden durch Umsetzung eines Überschusses der oben aufgezählten Amine mit polymeren Fettsäuren hergestellt.

Geeignete Lösemittel sind Ester, Alkohole sowie aromatische Verbindungen. Bevorzugt sind die eingesetzten Primer chromatfrei. Als Korrosionsschutzpigmente enthalten sie bevorzugt Zinkphosphate. Daneben enthalten sie Titandioxid und Füllstoffe. Die eingesetzten Primer können zudem mit Ruß und/oder Eisenoxiden pigmentiert sein.

**Basislacke**

Es können sowohl lösemittelbasierte, als auch wässrige Basislacke eingesetzt werden.

Die lösemittelbasierten Basislacke enthalten bevorzugt Celluloseacetobutyrat sowie Polyester- und/oder Polyacrylat- und Polymethacrylatharze (im Folgenden als Poly(meth)acrylatharze bezeichnet). Die Polyester- und/oder

Poly(meth)acrylatharze enthalten vorzugsweise zusätzlich unterschiedliche funktionelle Gruppen zur chemischen Vernetzung, wobei Hydroxygruppen bevorzugt sind.

Als Vernetzer werden niedrigviskose aliphatische Polyisocyanataddukte eingesetzt, welche bereits in Zusammenhang mit der Beschreibung des erfindungsgemäßen lösemitttelbasierten Füllers diskutiert wurden. Ganz besonders bevorzugt werden hier ebenfalls Isocyanurattrimere des Hexamethylendiisocyanats eingesetzt.

Als Lösemittel können all jene verwendet werden, welche oben bereits in Zusammenhang mit dem erfindungsgemäßen lösemittelbasierten Füller genannt worden sind.

Bevorzugt ist der Einsatz von wässrigen Basislacken. Wässrig ist eine dem Fachmann geläufige Spezifizierung von Beschichtungsmitteln, die als Lösemittel nicht ausschließlich organische Lösemittel enthalten, sondern auch auf Wasser als Lösemittel basieren. Wässrig bedeutet im Rahmen der vorliegenden Erfindung insbesondere, dass der Basislack vorzugsweise mindestens 20 Gew.-%, besonders bevorzugt mindestens 25 Gew.-% Wasser, jeweils bezogen auf die Gesamtmenge des wässrigen Basislacks, enthält. Besonders bevorzugt ist wässrig so zu verstehen, dass neben der genannten Bedingungen "mindestens 20 Gew.-% (beziehungsweise mindestens 25 Gew.-%) Wasser, bezogen auf die Gesamtmenge des wässrigen Basislacks" als weitere Voraussetzung zu erfüllen ist, dass der Anteil organischer Lösemittel in dem Basislack kleiner als 10 Gew.-%, jeweils bezogen auf die Gesamtmenge des wässrigen Basislacks, ist.

Des Weiteren kann der wässrige Basislack neben Wasser auch organische Lösemittel enthalten. Bevorzugt eingesetzt werden wassermischbare organische Lösem ittel.

Als Bindemittel in wässrigen Basislacken dienen bevorzugt Polyurethan-, Polyester- und/oder Epoxidharze. Ebenfalls möglich ist der Einsatz von Poly(meth)acrylatharzen Die genannten organischen Polymere enthalten vorzugsweise zusätzlich unterschiedliche funktionelle Gruppen zur chemischen Vernetzung, wobei Hydroxygruppen bevorzugt sind. Die Dispergierbarkeit der organischen Polymere in Wasser kann über die dem Fachmann geläufigen Maßnahmen erreicht werden. Dabei kann es sich um die ionische Modifizierung der organischen Polymere durch Einführung von Monomeren, die beispielsweise Carboxylat- oder Sulfonatgruppen enthalten, handeln. Als Vernetzer werden bevorzugt Polyisocyanate eingesetzt. Bevorzugte Polyisocyanate sind all jene, welche bereits bei der Beschreibung des lösemittelbasierten Füllers offenbart wurden.

Daneben enthält der sowohl ein lösemittelbasierter als auch ein wässriger Basislack mindestens ein übliches und bekanntes farbgebendes und/oder effektgebendes Pigment. Beispiele für solche Pigmente sind Pigmente auf anorganischer Basis, wie beispielsweise Titandioxid, Eisenoxid und Ruß oder auch übliche Metallpigmente (beispielsweise handelsübliche Aluminiumbronzen, Edelstahlbronzen) und nichtmetallische Effektpigmente (beispielsweise Perlglanz- beziehungsweise Interferenzpigmente). Auch farbgebende Pigmente auf organischer Basis wie Azopigmente und Phthalocyaninpigmente können zum Einsatz kommen. Die Auswahl von Art und einzusetzender Menge von Pigmenten erfolgt in der dem Fachmann geläufigen Art und Weise und richtet sich nach den erforderlichen beziehungsweise gewünschten Eigenschaften des Beschichtungsmittels. Ergänzend sei hierzu auf Römpp-Lexikon Lacke und Druckfarben, Georg Thieme Verlag, Stuttgart, New York, 1998, Seite 451, verwiesen.

**Klarlack**

Bekanntermaßen ist ein Klarlack ein Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. Bei den einzusetzenden Klarlacken handelt es sich um die auf dem Gebiet der Reparaturlackierung üblicherweise verwendeten Klarlacke, deren Auswahl und Einsatz dem Fachmann bekannt ist. Üblicherweise enthält ein solcher Klarlack OH-funktionelle Poly(meth)acrylatharze. Als Vernetzer werden niedrigviskose aliphatische Polyisocyanataddukte eingesetzt. Hierbei können dieselben Polyisocyanate eingesetzt werden, welche bereits bei der Beschreibung des erfindungsgemäßen Füllers eingesetzt wurden.

**Applikation des Primers, des Füllers, des Basislacks und des Klarlacks**

Die Applikation des Primers erfolgt nach den üblichen Applikationsmethoden wie beispielsweise Spritzen, Rakeln, Streichen, Giessen, Tauchen, Tränken, Träufeln oder Walzen. Bevorzugt ist die Spritzapplikation. Die Applikation des Primers erfolgt in den üblichen und bekannten Schichtdicken, beispielsweise in Nassfilmschichtdicken von 20 bis 70 Mikrometer, vorzugsweise von 30 bis 50 Mikrometer. Die dabei resultierenden Trockenfilmschichtdicken nach der Härtung liegen dann beispielsweise im Bereich von 10 bis 30 Mikrometer, vorzugsweise im Bereich von 15 bis 20 Mikrometer. Vor der Applikation des erfindungsgemäßen Füllers wird die Primerschicht getrocknet. Dies kann beispielsweise bei Raumtemperatur (18 bis 23°C) für 5 bis 90 Minuten, bevorzugt 20 bis 80 Minuten und ganz besonders bevorzugt bei 30 bis 70 Minuten erfolgen.

Üblicherweise liegen vor der Applikation des Füllers jeweils eine Härter- eine Füller- und eine Verdünnungskomponente vor. Dabei enthält die Härterkomponente das Vernetzungsmittel, die Füllerkomponente das Bindemittel sowie entsprechende Pigmente und Füllstoffe und die Verdünnungskomponente entsprechende Lösemittel. Das erfindungsgemäße Additiv kann sich entweder in der Füllerkomponente oder im Verdünner befinden. Kurz vor der Applikation werden diese drei Komponenten in einem dem Fachmann geläufigen Verhältnis miteinander gemischt und der resultierende Füller appliziert. Es können grundsätzlich alle oben genannten Applikationsmethoden, welche bereits im Zusammenhang mit dem Primer genannt wurden, eingesetzt werden. Bevorzugt ist die Spritzapplikation. Die Applikation des erfindungsgemäßen lösemittelbasierten Füllers erfolgt in den üblichen und bekannten Schichtdicken, beispielsweise in Nassfilmschichtdicken von 70 bis 160 Mikrometer, vorzugsweise von 80 bis 140 Mikrometer. Die dabei resultierenden Trockenfilmschichtdicken nach der Härtung liegen dann beispielsweise im Bereich von 40 bis 80 Mikrometer, vorzugsweise im Bereich von 50 bis 70 Mikrometer.
Im Anschluss werden die Primerschicht und die Füllerschicht gemeinsam gehärtet. Die Härtung weist keine methodischen Besonderheiten auf, sondern erfolgt nach den üblichen und bekannten Methoden wie beispielsweise Erhitzen in einem Umluftofen. So kann die Härtung zum Beispiel im Bereich der Raumtemperatur (18 bis 23°C) oder auch bei erhöhten Temperaturen im Bereich von beispielsweise 40°C bis 100°C, bevorzugt von 50°C bis 90°C erfolgen. Beispielsweise kann die Härtung über einen Zeitraum von 5 bis 120 Minuten, bevorzugt 10 bis 40 Minuten, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 Minuten.

Anschließend erfolgt die Applikation eines Basislacks. Die generellen Applikationsmethoden des Basislacks weisen keine methodischen Besonderheiten auf und entsprechen denen, wie sie weiter oben für den Primer beziehungsweise für den lösemittelbasierten Füller beschrieben wurden.

Die Applikation des Basislacks erfolgt in den üblichen und bekannten Schichtdicken, wie beispielsweise Nassfilmschichtdicken im Bereich von 20 bis 100 Mikrometer, vorzugsweise im Bereich von 30 bis 60 Mikrometer. Die dabei resultierenden Trockenfilmschichtdicken nach der Härtung liegen dann beispielsweise im Bereich von 10 bis 40 Mikrometer, vorzugsweise im Bereich von 14 bis 20 Mikrometer.

Vor der Applikation des Klarlacks wird die Basislackschicht getrocknet. Dies kann beispielsweise bei Raumtemperatur (18 bis 23°C) für 5 bis 60 Minuten, bevorzugt 5 bis 40 Minuten und ganz besonders bevorzugt bei 10 bis 30 Minuten erfolgen.

Anschließend erfolgt die Applikation des Klarlacks. Die generellen Applikationsmethoden des Klarlacks weisen keine methodischen Besonderheiten auf und entsprechen denen, wie sie weiter oben für den Primer beziehungsweise für den lösemittelbasierten Füller beschrieben wurden. Besonders bevorzugt ist die Spritzapplikation.

Die Applikation des Klarlacks erfolgt in den üblichen und bekannten Schichtdicken, wie beispielsweise Nassfilmschichtdicken im Bereich von 50 bis 200 Mikrometer, vorzugsweise im Bereich von 60 bis 150 Mikrometer. Die dabei resultierenden Trockenfilmschichtdicken nach der Härtung liegen dann beispielsweise im Bereich von 25 bis 90 Mikrometer, vorzugsweise im Bereich von 35 bis 70 Mikrometer.

Im Anschluss werden die Basislackschicht und die Klarlackschicht gemeinsam gehärtet. Die Härtung weist keine methodischen Besonderheiten auf, sondern erfolgt nach den üblichen und bekannten Methoden wie beispielsweise Erhitzen in einem Umluftofen. So kann die Härtung zum Beispiel im Bereich der Raumtemperatur (18 bis 23°C) oder auch bei erhöhten Temperaturen im Bereich von beispielsweise 40°C bis 100°C, bevorzugt von 50°C bis 90°C erfolgen. Beispielsweise kann die Härtung über einen Zeitraum von 5 bis 120 Minuten, bevorzugt 10 bis 40 Minuten, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 Minuten.

Die mit Hilfe des erfindungsgemäßen lösemittelbasierten Füllers hergestellten Mehrschichtlackierungen weisen eine ausgezeichnete Haftung zwischen Füller- und Primerschicht sowie zwischen Füller und Basislackschicht auf. Eine Verbesserung der Haftung tritt ebenfalls auf, wenn das beschichtete Substrat beispielsweise einer Bewitterung ausgesetzt wurde. Unter einer Verbesserung der Haftung ist die Verbesserung gegenüber einem Füller zu verstehen, der kein erfindungsgemäßes Additiv enthält.

Die erfindungsgemäßen Füller eigen sich insbesondere für eine Anwendung in der Automobilreparaturlackierung.

**Verwendung des erfindungsgemäßen Additivs als Haftvermittler**

Die vorliegende Erfindung betrifft schließlich auch die Verwendung mindestens eines Additivs in lösemittelbasierten Füllern, wobei das Additiv herstellbar ist durch die Umsetzung von

(a) mindestens einem alpha,omega-hydroxyfunktionalisierten Oligoester, welcher eine OH-Zahl von 30 bis 160 mg KOH/g, einen theoretischen Kohlenstoff-Kohlenstoff-Doppelbindungsgehalt von 1 bis 2,5 mmol/g, ein zahlenmittleres Molekulargewicht von 1000 bis 3000 g/mol und ein gewichtsmittleres Molekulargewicht von 2800 bis 10000 g/mol besitzt, und

(b) mindestens einem Alkoxysilan der Strukturformel (II)

$$A\text{-}R\text{-}Si(R')_x(OR'')_{3-x}$$

wobei

- A eine OH-reaktive funktionelle Gruppe ist, nämlich eine Isocyanatgruppe oder eine Epoxidgruppe,
- R ein aliphatischer Rest mit 2 bis 12 Kohlenstoffatomen, ein cycloaliphatischer Rest mit 3 bis 12 Kohlenstoffatomen, ein aromatischer Rest mit 6 bis 12 Kohlenstoffatomen oder ein araliphatischer Rest mit 7 bis 18 Kohlenstoffatomen ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt,

mit der Maßgabe, dass mindestens 90 mol-% aller OH-Gruppen des alpha,omega-hydroxyfunktionalisierten Oligoesters mit einer OH-reaktiven funktionellen Gruppe A zur Reaktion gebracht werden,
und zudem die Summe über die gewichtsprozentualen Anteile aller erfindungsgemäßen Additive 1,5 bis 10 Gew.-% bezogen auf die Gesamtmenge des lösemittelbasierten Füllers beträgt.

Alle oben hinsichtlich des erfindungsgemäßen lösemittelbasierten Füllers bereits diskutierten besonderen Merkmale sind ebenfalls für die in Rede stehende erfindungsgemäße Verwendung bevorzugt.

Unter Haftungsverbesserung ist eine Verbesserung der Haftung im Vergleich zu solchen Füllern zu verstehen, welche kein erfindungsgemäßes Additiv enthalten.

Die Haftung kann beispielsweise mit Hilfe des Gitterschnitttests nach DIN EN ISO 2409 (Datum: April 2010) untersucht werden. Die erfindungsgemäßen Additive tragen auch zu einer Verbesserung der Haftung bei, nachdem das Substrat einer Bewitterung ausgesetzt wurde. Eine solche Bewitterung lässt sich beispielsweise durch den Konstant-Klima-Test gemäß der DIN EN ISO 6270-2 CH (Datum: September 2005) simulieren. Bevorzugt werden die erfindungsgemäßen Additive zur Verbesserung der Haftung bei der Lackierung von Nutzfahrzeugen eingesetzt. Dabei wird sowohl die Haftung zwischen Substrat und Füller, als auch die Haftung zwischen Füller und Decklack verbessert.

Ebenfalls bevorzugt werden die erfindungsgemäßen Additive zur Verbesserung der Haftung bei der Autoreparaturlackierung eingesetzt. Unter dem Begriff Autoreparaturlackierung ist unter anderem die Reparaturlackierung zu verstehen, welche beispielsweise in einer Werkstatt zur Ausbesserung von beschädigten Altlackierungen stattfindet. Fehlstellen in Lacken können grundsätzlich auch direkt nach erfolgter OEM-Lackierung auftreten. Man spricht dann von OEM-Reparaturlackierung. Die erfindungsgemäßen Füller können ebenfalls in der OEM-Reparaturlackierung eingesetzt werden. In beiden Fällen eignen sich die erfindungsgemäßen Füller auch zur Ausbesserung von kleinen Fehlstellen, den sogenannten "Spots". Ein solcher Prozess wird auch als "Spot Repair" bezeichnet.

## Beispiele

### Herstellbeispiele

#### Beispiel A: Darstellung eines alpha,omega-hydroxyfunktionalisierten Oligoesters

Die in Tabelle 1 bezeichneten Edukte werden wie im Folgenden dargestellt in den dort angegeben molaren Verhältnissen zur Reaktion gebracht. Zunächst werden Maleinsäureanhydrid (MSA), Adipinsäure (AD) und 1,6-Hexandiol (HD) in einen 4-Liter-Reaktor aus rostfreiem Stahl, ausgestattet mit einer Kolonne, einem Kühler sowie einem Wasserabscheider gegeben. Anschließend erfolgt die Zugabe von 3% Xylol als Schleppmittel und 0.1% Methylhydochinon (die prozentualen Angaben beziehen sich auf die Menge des eingesetzten MSA, AD und HD). Das resultierende Reaktionsgemisch wird innerhalb von 5 Stunden unter Magerluft aufgeheizt. Während der gesamten Reaktionszeit überschreitet die Temperatur des Reaktionsgemischs 230°C nicht. Nachdem eine Säurezahl von 2 mg KOH/g erreicht wird, wird das Reaktionsgemisch auf 80 °C abgekühlt. Der resultierende alpha,omega-hydroxyfunktionalisierte Oligoester weist die folgenden Kennzahlen auf:

OH-Zahl: 65 mg KOH/g
Zahlenmittleres Molekulargewicht: 1412 g/mol
Gewichtsmittleres Molekulargewicht: 3313 g/mol
Theoretischer Kohlenstoff-Kohlenstoff-Doppelbindungsgehalt: 1,86 mmol/g

Tabelle 1: Stoffmengen der einzusetzenden Edukte in mol.

| | Rohstoff | Stoffmenge |
|---|---|---|
| 1 | MSA | 5,05 |
| 2 | AD | 5,53 |
| 3 | HD | 14,46 |
| Festkörper [%] | | 97 |

**Beispiel B: Herstellung eines erfindungsgemäßen Additivs (A1)**

In einem Stahlreaktor, ausgestattet mit einem Rückflusskühler und einem Thermometer, werden 27,4 Teile 3-Isocyanatopropyltriethoxysilan der Firma ABCR GmbH & Co.KG (euopäischer Versand der Gelest INC. Produkte), 9,4 Teile Butylacetat, 0,2 Teile 1,4-Diazabicyclo-2,2,2-octan und 2,2 Teile Triethylorthoformiat vorgelegt. Über einen Tropftrichter wird anschließend ein Gemisch aus 46,3 Teilen des alpha,omega-hydroxyfunktionalisierten Oligoesters (Beispiel A) und 14,5 Teile Butylacetat unter Stickstoffatmosphäre und Rühren zugetropft. Nach 6-stündigem Rühren bei 70-80°C wird der NCO-Wert titrimetrisch gemäß DIN EN ISO 11909 (Datum: Mai 2007) überprüft und die Reaktion so lange fortgeführt, bis ein NCO-Wert von 0 festgestellt wird. Das erfindungsgemäße Additiv A1 weist einen nichtflüchtigen Anteil von 71,8 Gew.-% auf.

**I) Reparaturlackierung bei Nutzfahrzeugen**

**I.1) Herstellung eines das Additiv (A1) enthaltenden lösemittelbasierten Füllers**

Es wurde ein handelsüblicher Füller verwendet. Dieser setzt sich zusammen aus den drei Komponenten Füllerkomponente, Härter und Verdünner. Die jeweiligen Zusammensetzungen dieser Komponenten sind in Tabelle 2 wiedergegeben. Die Komponenten Füllerkomponente, Härter und Verdünner werden im Verhältnis 100 : 19,5 : 16 eingesetzt, wobei sich das Verhältnis auf das Gewicht der Komponenten bezieht. Hieraus ergibt sich die Gesamtmenge des Füllers. Es werden jeweils 0, 2, 4 und 6 Gew.-% des erfindungsgemäßen Additivs (A1) bezogen auf die Gesamtmenge des Füllers eingesetzt. Zur Mischung wird ein Laborrührer (260-1820 rpm) eingesetzt. Das Additiv A1 wird der Härter-Komponente zugesetzt.

Tabelle 2: Zusammensetzung des eingesetzten Füllers (Füllerkomponente, Härter, Verdünnung).

| **Härter** | |
|---|---|
| Komponente | Gew.-% |
| HDI-Basonat HI 190 B/S, 90%SN | 50,5 |
| Xylol | 5,0 |
| Butylacetat 98-100% | 23,7 |
| 1-Methoxypropylacetat | 9,0 |
| Silquest A-187 | 3,6 |
| Baysilon OL 44 | 0,7 |
| Aktivator | 7,5 |
| **Füllerkomponente** | |
| Komponente | Gew.-% |
| Handelsübliche Dispersion eines OH-funktionellen Acrylatharzes in organischen Lösemitteln | 23,9 |
| Xylol | 2,0 |
| Solventnaphta | 3,7 |
| Nuosperse FA 601 | 0,2 |

(fortgesetzt)

| Füllerkomponente | |
|---|---|
| Komponente | Gew.-% |
| 1-Methoxypropylacetat | 6,7 |
| Aerosil 380 | 0,2 |
| Bentone 34, 100% | 1,7 |
| Russ flamm - 101 | 0,1 |
| Bayferrox 920 | 1,8 |
| Incomp KL 30 | 6,5 |
| Heucophos ZPO | 12,4 |
| Luzenac 10MO | 9,2 |
| Titan Rutil | 12,5 |
| Shieldex AC 3 | 6,6 |
| Butylglykolacetat | 1,5 |
| 1 -Methoxypropylacetat | 2,7 |
| Xylol | 0,4 |
| Verlaufsm ittel | 0,5 |
| Baysilone Fluid OL-44 | 0,1 |
| Epoxidharz | 8,6 |
| **Verdünnung** | |
| Komponente | Gew.-% |
| 1-Methoxypropylacetat | 46,5 |
| Butylacetat 98-100% | 30,0 |
| Xylol | 20,0 |
| Butylglykolacetat | 2,0 |
| Ethyl-3-ethoxypropionat | 1,5 |

Silquest A-187: gamma-Glycidoxypropyltrimethoxysilan, Baysilon OL 44: Grenzflächenadditiv, Aktivator: DBTL-Lösung (1 Gew.-% DBTL) in Xylol/Butylacetat, Nuosperse FA 601: Netz- und Dispergiermittel, Aerosil 380: Hydrophile pyrogene Kieselsäure, Bentone 34: Rheologieadditiv, Russ flamm - 101: Russ-Pigment, Bayferrox 920: Gelbes Eisenpigment, Incomp KL 30: Mineral auf Basis von Talk und Dolomit, Heucophos ZP0: Korrosionsschutzpigment, Luzenac 10MO: Magnesiumsilikat, Shieldex AC 3: Korrosionsschutzpigment.

**I.2) Herstellung beschichteter Substrate**

Als Substrate wurden Tafeln aus Aluminium, jeweils in Form von Testplatten mit einer Größe von 20 x 10 x 0,45 cm eingesetzt. Die Tafeln wurden zunächst abgeschliffen. Hierzu wurde Schleifpapier mit der Körnung P240 eingesetzt. Kurz vor der Applikation des Füllers wurden Füllerkomponente, Härter, Verdünnung homogen mittels eines Holzspachtels verrührt. Die Applikation erfolgte mittels pneumatischer Spritzapplikation Anschließend wurde die erhaltene Füllerschicht für 60 Minuten bei Raumtemperatur getrocknet. Daraufhin wurde ein handelsüblicher Decklack mittels pneumatischer Spritzapplikation aufgetragen. Anschließend wurde für 10 Minuten bei Raumtemperatur getrocknet gefolgt von der gemeinsamen Härtung von Füller- und Decklackschicht für 30 Minuten bei 60 °C Objekttemperatur im Umluftofen. Im dem resultierenden Substrat wies die Füllerschicht eine Trockenfilmschichtdicke von 77 Mikrometer und die Decklackschicht eine Trockenfilmschichtdicke von 75 Mikrometer auf.

Der handelsübliche Decklack setzt sich zusammen aus den drei Komponenten Decklackkomponente, Härter und Verdünner. Die Komponenten Decklackkomponente, Härter und Verdünner werden im Verhältnis 100 : 19,5 : 16

eingesetzt, wobei sich das Verhältnis auf das Gewicht der Komponenten bezieht. Die jeweiligen Zusammensetzungen dieser Komponenten zur Herstellung des Decklacks sind in Tabelle 3 wiedergegeben.

Tabelle 3: Zusammensetzung des eingesetzten Decklacks (Decklackkomponente, Härter, Verdünnung).

| **Härter** | | **Decklackkomponente** | | **Verdünnung** | |
|---|---|---|---|---|---|
| Komponente | Gew.-% | Komponente | Gew.-% | Komponente | Gew.-% |
| HDI-Desmodur N3600 | 90 | Polyester 3.5 VOC | 12,4 | 1-Methoxypropylacetat | 6 |
| Butylacetat 98-100% | 10 | Acetylaceton | 2,2 | Butylacetat 98-100% | 50 |
| | | Benzoesäure D | 0,4 | Xylol | 15 |
| | | Methylisobutylketon | 1 | Butylglykolacetat | 3 |
| | | BYK-331 100% | 0,08 | Ethylethoxypropionat | 1 |
| | | BYK-358 N, 52% | 0,1 | Solventnaphtha 160/180 | 13 |
| | | Tinuvin 292 | 0,31 | Testbenzin 135/180 | 10 |
| | | Tinstab BL 277 100% | 0,04 | Dipenten | 2 |
| | | BYK 054 | 0,18 | | |
| | | Disparlon 9050 | 0,26 | | |
| | | Xylol | 3 | | |
| | | Butylacetat 98-100% | 4,2 | | |
| | | 1-Methoxypropylacetat | 0,71 | | |
| | | Acrylique 324 New Process BASF | 21,1 | | |
| | | Acrylique TSA UNO BASF | 14,32 | | |
| | | Bentone 34, 100% | 0,2 | | |
| | | Aerosil R972 | 0,3 | | |
| | | Disperbyk-180 | 0,9 | | |
| | | Titan Rutil Tiona 595 | 37,3 | | |
| | | Solventnaphtha 165/185 | 0,9 | | |
| | | Additiv M-P-A 2000X, 20% in Xylol | 0,001 | | |
| | | Disperbyk-111 | 0,003 | | |
| | | Bayferrox 3920 | 0,11 | | |
| | | Disperbyk-166, 30% Methylpropylacetat/Butylatcetat 1:4 | 0,001 | | |
| | | Ruß Spezialschwarz 100 | 0,003 | | |
| | | Activator | 0,00015 | | |

Polyester 3.5 VOC ist ein handelsüblicher OH-funktioneller Polyester (Dispersion in organischen Lösemitteln). Acrylique 324 New Process BASF ist eine herkömmliche Dispersion eines OH-funktionellen OH-Acrylats in organischen Lösemitteln. Acrylique TSA UNO BASF ist ebenfalls eine herkömmliche Dispersion eines OH-funktionellen OH-Acrylats in organischen Lösemitteln. Bei dem "Activator" handelt es sich um einen Katalysator.

**I.3) Untersuchung der Haftungseigenschaften**

Die Haftungseigenschaften der hergestellten Beschichtungen wurden mittels Gitterschnitt (DIN EN ISO 2409; Datum: April 2010) nach vier verschiedenen Alterungskonditionen untersucht. Von jeder Füllerzusammensetzung, gekennzeichnet durch ihren Gehalt an Additiv (kein Additiv, 2 Gew.-%, 4 Gew.-% und 6 Gew.-%), wurden insgesamt zwei Proben hergestellt und jeweils einzeln untersucht. Aus den resultierenden Ergebnissen wurde für jede Füllerzusammensetzung der Mittelwert gebildet.

Die erste Alterungskondition betrifft eine Lagerung bei 40 °C für 16h. Im Sinne der drei weiteren Alterungskonditionen wurden die Proben 10 Tage in einer Klimakammer (KK) bei 100 % Luftfeuchtigkeit und 40 °C gelagert (Konstant-Klima-Test gemäß DIN EN ISO 6270-2 CH; Datum: September 2005). Anschließend wurde die Haftung der Proben 1h, 3h und 24h nach Entnahme aus der Klimakammer untersucht.

Die erhaltenen Ergebnisse sind in Tabelle 4 dargestellt. Dabei bedeutet der Eintrag "keine", dass Enthaftung weder zwischen Substrat und Füller noch zwischen Füller und Decklack aufgetreten ist. Ferner bedeutet der Eintrag "Fü/De", dass Enthaftung zwischen Füller und Decklack zu beobachten war.

Die Bewertung der Haftung erfolgte über ein Notensystem mit Noten von 0 bis 5, wobei die Note 0 für Beschichtungen vergeben wurde, die nach der Haftungsprüfung keine sichtbaren Spuren aufwiesen (sehr gute Haftung). Die Note 5 wurde für Beschichtungen vergeben, die nach der Haftungsprüfung deutlich abgelöste Bereiche aufwiesen (ungenügende Haftung).

Aus den in Tabelle 4 dargestellten Ergebnissen folgt, dass sich durch den Einsatz des Additivs eine deutliche Verbesserung der Haftung erzielen lässt.

Tabelle 4: Haftungseigenschaften des nichtadditivierten sowie der additivierten Füller.

| Alterungskondition | ohne Additiv | 2 Gew.-% Additiv | 4 Gew.-% Additiv | 6 Gew.-% Additiv |
|---|---|---|---|---|
| 16h nach 40 °C | 1 | 1 | 1 | 0 |
| Enthaftung zwischen: | keine | keine | keine | keine |
| 1h nach KK | 3 | 3 | 0 | 1 |
| Enthaftung zwischen: | Fü/De | Fü/De | keine | keine |
| 3h nach KK | 5 | 5 | 2 | 3 |
| Enthaftung zwischen: | Fü/De | Fü/De | Fü/De | Fü/De |
| 24h nach KK | 4 | 3 | 1 | 2 |
| Enthaftung zwischen: | Fü/De | Fü/De | Fü/De | Fü/De |

**II) Automobilreparaturlackierung**

**II.1) Herstellung eines das Additiv (A1) enthaltenden lösemittelbasierten Füllers**

Es wurde ein handelsüblicher Füller verwendet. Dieser setzt sich zusammen aus den drei Komponenten Füllerkomponente, Härter und Verdünner. Die jeweiligen Zusammensetzungen dieser Komponenten sind nachstehend in Tabelle 5 wiedergegeben. Die Komponenten Füllerkomponente, Härter und Verdünner werden im Verhältnis 100 : 17,5 : 13,5 eingesetzt, wobei sich das Verhältnis auf das Gewicht der Komponenten bezieht. Hieraus ergibt sich die Gesamtmenge des Füllers. Es werden jeweils 0, 2, 4 und 6 Gew.-% des erfindungsgemäßen bifunktionellen Additivs (A1) bezogen auf die Gesamtmenge des Füllers eingesetzt. Zur Additivierung wird ein Laborrührer (260-1820 rpm) eingesetzt. Das Additiv A1 wird der Härter-Komponente zugesetzt.

Tabelle 5: Zusammensetzung des eingesetzten Füllers (Füllerkomponente, Härter, Verdünnung).

| Härter | | Füllerkomponente | | Verdünnung | |
|---|---|---|---|---|---|
| Komponente | Gew.-% | Komponente | Gew.-% | Komponente | Gew.-% |
| HDI-Desmodur N3600 | 35,1 | Polyester 5085 | 19,03 | 1-Methoxypropylacetat | 6 |
| Butylacetat 98-100% | 41,1 | Acrylester 365 | 2,2 | Butylacetat 98-100% | 50 |

(fortgesetzt)

| Härter | | Füllerkomponente | | Verdünnung | |
|---|---|---|---|---|---|
| Komponente | Gew.-% | Komponente | Gew.-% | Komponente | Gew.-% |
| 1-Methoxipropylacetat-2 | 4,25 | BYK-P 104, 50% in Xylol/ DIBK, 9:1 | 0,23 | Xylol | 15 |
| Xylol | 5,65 | Bentone 34, 100% | 0,52 | Butylglykolacetat | 3 |
| Ethylethoxypropionat | 1,6 | Butylacetat 98-100% | 10,12 | Etyhlethoxypropionat | 1 |
| Tinstab BL 277 100% | 0,06 | 1 -Methoxypropylacetat | 6,6 | Solventnaphtha 160/180 | 13 |
| Desmodur XP 2565, 80% Butylacetat | 12,3 | Aerosil R972 | 1,48 | Testbenzin 135/180 | 10 |
| | | Talkum AT Extra, Micro | 5,15 | Dipentene | 2 |
| | | China Clay Polwhite B | 12,65 | | |
| | | Zinkphosphat PZ 20 | 10,2 | | |
| | | Tiona 595 | 10,54 | | |
| | | Bayferrox 306 | 1,27 | | |
| | | Blanc Fixe N | 11,6 | | |
| | | Zeeospheres G-400 | 5,15 | | |
| | | Xylol | 0,85 | | |
| | | Tinstab BL 277 100% | 0,1 | | |
| | | DOW E.R. 671 60%ig in Xylol | 2,21 | | |
| | | Butylglykolacetat | 0,1 | | |

Polyester 5085 ist ein herkömmlicher OH-funktioneller Polyester (Dispersion in organischen Lösemitteln). Acrylester 365 ist eine herkömmliche Dispersion eines OH-funktionellen OH-Acrylats in organischen Lösemitteln.

**II.2) Herstellung beschichteter Substrate**

Als Substrate wurden Tafeln aus Stahl, jeweils in Form von Testplatten mit einer Größe von 20 x 10 x 0,3 cm eingesetzt. Die Tafeln wurden zunächst abgeschliffen. Hierzu wurde Schleifpapier mit der Körnung P180 eingesetzt. Kurz vor der Applikation des Füllers wurden Füllerkomponente, Härter, Verdünnung homogen mittels eines Holzspachtels verrührt. Zunächst wurde ein handelsüblicher Primer appliziert und 10 Minuten bei Raumtemperatur getrocknet. Dann wurde der Füller mittels pneumatischer Spritzapplikation aufgetragen und 10 Minuten bei Raumtemperatur getrocknet. Dann wurden die beiden Schichten für 25 Minuten bei 60 °C Objekttemperatur im Umluftofen eingebrannt. Der Primer wies eine Trockenfilmschichtdicke von 16 Mikrometer und die Füllerschicht eine Trockenfilmschichtdicke von 60 Mikrometer auf. Der Füller wurde im Anschluss von Hand angeschliffen (Schleifvlies P400) und dann mittels herkömmlicher Reinigungsverdünnung von Schleifrückständen gereinigt. Daraufhin wurde ein handelsüblicher Basislack aufgetragen und für 10 Minuten bei Raumtemperatur getrocknet. Dann wurde ein handelsüblicher 2K-Klarlack via pneumatischer Spritzapplikation aufgetragen und ebenfalls für 10 Minuten bei Raumtemperatur getrocknet. Dann wurde der Gesamtaufbau aus Basis- und Klarlack für 10 Minuten bei 60 °C Objekttemperatur im Umluftofen eingebrannt. Der Basislack wies eine Trockenfilmschichtdicke von 15 Mikrometer und die Klarlackschicht eine Trockenfilmschichtdicke von 38 Mikrometer auf.

Es wurde ein handelsüblicher Primer verwendet. Dieser setzt sich zusammen aus den drei Komponenten Stammlack, Härter und Verdünner. Die jeweiligen Zusammensetzungen dieser Komponenten sind nachstehend wiedergegeben. Die Komponenten Stammlack, Härter und Verdünner werden im Verhältnis 100 : 35,8 : 8 eingesetzt, wobei sich das Verhältnis auf das Gewicht der Komponenten bezieht.

Tabelle 6: Zusammensetzung des eingesetzten Primers (Stammlackkomponente, Härter, Verdünnung).

| **Stammlackkomponente** | | **Härter** | | **Verdünner** | |
|---|---|---|---|---|---|
| Komponente | Gew.-% | Komponente | Gew.-% | Komponente | Gew.-% |
| Butanol | 5,6 | Ethanol | 27 | 1-Methoxypropylacetat-2 | 46,5 |
| n-Propanol | 21,8 | Isopropanol | 56 | Butylacetat 98-100% | 30 |
| Isobutanol | 3 | Butanol | 13 | Xylol | 20 |
| Butylacetat 98-100% | 8 | Phosporsäure | 4 | Butylglykolacetat | 2 |
| Mowital B 30H, 100% | 5,5 | | | Ethylethoxypropionat | 1,5 |
| Xylol | 7,8 | | | | |
| Parosin FE 45.5 | 6,3 | | | | |
| Phenodur PR 26370% in Butanol | 3,4 | | | | |
| Calcium-Naphtenat 4% Ca | 0,4 | | | | |
| Kieselsäure HDK T40 | 0,7 | | | | |
| Tiona 595 | 9,8 | | | | |
| Luzenac 10MO | 7,7 | | | | |
| Zinkoxid NC, 100% | 2,1 | | | | |
| Zinkphosphat PZ 20 | 5,7 | | | | |
| Bayferrox 3910 | 3,7 | | | | |
| Bayferrox 130BM | 0,07 | | | | |
| Russ Flamm 101 Pulver | 0,07 | | | | |
| Plastopal H 73 IB/X 35:1 | 0,5 | | | | |
| Solution Ethylcellulose | 4 | | | | |
| Solution Aldehydique | 4,3 | | | | |

Plastopal H 73 IB/X 35:1 ist ein Harnstoff-Formaldehyd-Harz. Tiona 95 ist Rutil. Phenodur PR 263 70% ist ein Phenolharz der Firma Cytec.

Es wurde ein handelsüblicher Basislack verwendet. Dieser setzt sich zusammen aus den zwei Komponenten Mischlack und Einstellzusatz. Die jeweiligen Zusammensetzungen dieser Komponenten sind nachstehend wiedergegeben. Zur Herstellung des Basislacks werden die Komponenten Mischlack und Einstellzusatz im Verhältnis 2:1 eingesetzt, wobei sich das Verhältnis auf das Volumen der Komponenten bezieht.

Tabelle 7: Zusammensetzung des eingesetzten Basislacks.

| **Mischlack** | | **Einstellzusatz** | |
|---|---|---|---|
| Komponente | Gew.-% | Komponente | Gew.-% |
| Herkömliche PUR-Dispersion 1 | 72,8 | Wasser | 97,3 |
| Herkömliche PUR-Dispersion 2 | 12 | Biozid | 0,2 |
| Herkömliche PUR-Dispersion 3 | 1,6 | Pluriol P900 | 1 |
| Butylglykol | 0,5 | Laponite RD | 1,5 |
| Alu Star Hydrolux 8154, 65% | 6 | | |
| Alu Star Hydrolux F90, 65% | 1,4 | | |
| sek. Butanol | 3,7 | | |

(fortgesetzt)

| Mischlack | | Einstellzusatz | |
|---|---|---|---|
| Komponente | Gew.-% | Komponente | Gew.-% |
| Raybo 61, 60% | 0,1 | | |
| TMDD BG 52 | 1,7 | | |
| Farbruß FW 2 | 0,004 | | |
| Aerosil R972 | 0,5 | | |
| Bayferrox 3910/R | 0,04 | | |
| Lanco Pew 1555 | 0,65 | | |

Lanco Pew 1555 ist ein wasserverdünnbares Polyetherwachs der Firma Lubrizol.

Es wurde ein handelsüblicher Klarlack verwendet. Dieser setzt sich zusammen aus den drei Komponenten Stammlack, Härter und Verdünner. Die jeweiligen Zusammensetzungen dieser Komponenten sind nachstehend wiedergegeben. Die Komponenten Stammlack, Härter und Verdünner werden im Verhältnis 100 : 50 : 8,6 eingesetzt, wobei sich das Verhältnis auf das Gewicht der Komponenten bezieht.

Tabelle 8: Zusammensetzung des eingesetzten Klarlacks (Stammlackkomponente, Härter, Verdünnung).

| Stammlackkomponente | | Härter | | Verdünnung | |
|---|---|---|---|---|---|
| Komponente | Gew.-% | Komponente | Gew.-% | Komponente | Gew.-% |
| Ethylethoxypropionat | 4 | 1-Methoxypropylacetat-2 | 3 | 1-Methoxypropylacetat | 6 |
| Methylisobutylketon | 6 | Butylacetat 98-100% | 15 | Butylacetat 98-100% | 50 |
| Handelsübliche Acrylatdispersion | 81 | Xylol | 10 | Xylol | 15 |
| Benzoesäure D | 1 | Methylisobutylketon | 13 | Butylglykolacetat | 3 |
| Tinuvin 5941-R | 2,2 | DBTL | 0,12 | Etyhlethoxypropionat | 1 |
| Handelsübliche Acrylatdispersion | 3 | Benzoesäure D | 2,5 | Solventnaphtah 160/180 | 13 |
| Byk 325, 52% | 0,2 | Wasserfänger | 0,35 | Testbenzin 135/180 | 10 |
| Tinstab BL 277 100% | 2,2 | HDI-Desmodur N3600 | 56 | Dipenten | 2 |
| Butylacetat 98-100% | 2,6 | | | | |

**II.3) Untersuchung der Haftungseigenschaften**

Die Haftungseigenschaften der hergestellten Beschichtungen wurden wie unter I.3) beschrieben mittels Gitterschnitt (DIN EN ISO 2409; Datum: April 2010) nach vier verschiedenen Alterungskonditionen untersucht.

Die erhaltenen Ergebnisse sind in Tabelle 9 dargestellt. Dabei bedeutet der Eintrag "keine", dass Enthaftung zwischen den Schichten aufgetreten ist. Ferner bedeutet der Eintrag "BL/Fü/De", dass Enthaftung sowohl zwischen Basislack und Füller als auch zwischen Füller und Primer zu beobachten war. Der Eintrag "BL/Fü/Su" bedeutet, dass Enthaftung sowohl zwischen Basislack und Füller als auch zwischen Füller, Primer und Basislack aufgetreten ist. Der Eintrag "Fü/Pr" bedeutet schließlich das Enthaftung ausschließlich zwischen Füller und Primer aufgetreten ist.

Die Bewertung der Haftung erfolgte über ein Notensystem mit Noten von 0 bis 5, wobei die Note 0 für Beschichtungen vergeben wurde, die nach der Haftungsprüfung keine sichtbaren Spuren aufwiesen (sehr gute Haftung). Die Note 5 wurde für Beschichtungen vergeben, die nach der Haftungsprüfung deutlich abgelöste Bereiche aufwiesen (ungenügende Haftung).

Tabelle 9: Haftungseigenschaften des nichtadditivierten sowie der additivierten Füller.

| Alterungskondition | ohne Additiv | 2 Gew.-% Additiv | 4 Gew.-% Additiv | 6 Gew.-% Additiv |
|---|---|---|---|---|
| 16h nach 40 °C | 4,5 | 2,5 | 1,5 | 0,5 |
| Enthaftung zwischen: | BL/Fü/Pr | BL/Fü/Su | BL/Fü/Pr | BL/Fü/Su |
| 1h nach KK | 1,5 | 0,5 | 2,5 | 3 |
| Enthaftung zwischen: | BL/Fü/Pr | BL/Fü/Pr | BL/Fü/Pr | BL/Fü/Pr |
| 3h nach KK | 2,5 | 0 | 1 | 0 |
| Enthaftung zwischen: | BL/Fü/Pr | keine | BL/Fü/Pr | keine |
| 24h nach KK | 1 | 1 | 0,5 | 0,5 |
| Enthaftung zwischen: | Fü/Pr | BL/Fü/Pr | BL/Fü/Pr | keine |

Aus den in Tabelle 9 dargestellten Ergebnissen folgt, dass sich durch den Einsatz des Additivs eine deutliche Verbesserung der Haftung erzielen lässt.

## Patentansprüche

1. Lösemittelbasierter Füller, **dadurch gekennzeichnet, dass** dieser mindestens ein Additiv enthält, welches herstellbar ist durch die Umsetzung von

   (a) mindestens einem alpha,omega-hydroxyfunktionalisierten Oligoester, welcher eine OH-Zahl von 30 bis 160 mg KOH/g, einen theoretischen Kohlenstoff-Kohlenstoff-Doppelbindungsgehalt von 1 bis 2,5 mmol/g, ein zahlenmittleres Molekulargewicht von 1000 bis 3000 g/mol und ein gewichtsmittleres Molekulargewicht von 2800 bis 10000 g/mol besitzt, und
   (b) mindestens einem Alkoxysilan der Strukturformel (II)

   $$A\text{-}R\text{-}Si(R')_x(OR'')_{3-x}$$

   wobei

   - A eine OH-reaktive funktionelle Gruppe ist, nämlich eine Isocyanatgruppe oder eine Epoxidgruppe,
   - R ein aliphatischer Rest mit 2 bis 12 Kohlenstoffatomen, ein cycloaliphatischer Rest mit 3 bis 12 Kohlenstoffatomen, ein aromatischer Rest mit 6 bis 12 Kohlenstoffatomen oder ein araliphatischer Rest mit 7 bis 18 Kohlenstoffatomen ist,
   - der Rest R' ausgewählt ist aus der Gruppe der $C_1$- bis $C_{12}$-Alkylreste,
   - R" ein Methyl- oder Ethylrest ist, und
   - x = 0 bis 2 beträgt,

   mit der Maßgabe, dass mindestens 90 mol-% aller OH-Gruppen des alpha,omega-hydroxyfunktionalisierten Oligoesters mit einer OH-reaktiven funktionellen Gruppe A zur Reaktion gebracht worden sind,
   und zudem die Summe über die gewichtsprozentualen Anteile aller dieser Additive 1,5 bis 10 Gew.-% bezogen auf die Gesamtmenge des lösemittelbasierten Füllers beträgt.

2. Lösemittelbasierter Füller nach Anspruch 1, **dadurch gekennzeichnet, dass** zur Herstellung des alpha,omega-hydroxyfunktionalisierten Oligoesters mindestens eine gesättigte lineare aliphatische Dicarbonsäure oder deren Anhydrid, mindestens eine einfach ungesättigte lineare aliphatische Dicarbonsäure oder deren Anhydrid und mindestens ein gesättigtes aliphatisches Diol eingesetzt wird.

3. Lösemittelbasierter Füller nach mindestens einem der Ansprüche 1 und 2, **dadurch gekennzeichnet, dass** die Summe über die gewichtsprozentualen Anteile aller Additive 1,5 bis 7,5 Gew.-% bezogen auf die Gesamtmenge des lösemittelbasierten Füllers beträgt.

4. Lösemittelbasierter Füller nach mindestens einem der Ansprüche 1 bis 3, **dadurch gekennzeichnet, dass** der

alpha,omega-hydroxyfunktionalisierte Oligoester die folgende Strukturformel (I) besitzt:

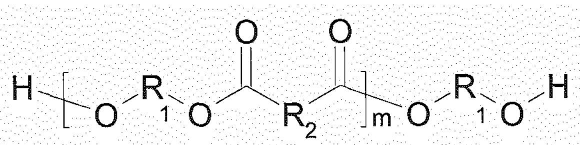

(I)

wobei

- die Reste $R_1$ unabhängig voneinander ausgewählt sind aus der Gruppe der linearen oder cyclischen Alkylenreste,
- die Reste $R_2$ unabhängig voneinander ausgewählt sind aus der Gruppe der Alkylen- oder Alkenylenreste, wobei das Verhältnis von Alkylen- zu Alkenylenresten gerade so gewählt ist, dass der alpha,omega-hydroxyfunktionalisierte Oligoester der Strukturformel (I) einen theoretischen Kohlenstoff-Kohlenstoff-Doppelbindungsgehalt von 1 bis 2,5 mmol/g besitzt
- der Index m so gewählt ist, dass das zahlenmittlere Molekulargewicht des alpha,omega-hydroxyfunktionalisierten Oligoesters der Strukturformel (I) 1000 bis 3000 g/mol beträgt.

**5.** Lösemittelbasierter Füller nach Anspruch 4, **dadurch gekennzeichnet, dass** die Reste $R_1$ ausgewählt sind aus der Gruppe der linearen Alkylenreste mit 6 bis 10 Kohlenstoffatomen.

**6.** Lösemittelbasierter Füller nach mindestens einem der Ansprüche 4 und 5, **dadurch gekennzeichnet, dass** die Reste $R_2$ ausgewählt sind aus der Gruppe der linearen Alkylenreste mit 4 bis 8 Kohlenstoffatomen oder der linearen Alkenylenreste mit 2 bis 4 Kohlenstoffatomen.

**7.** Lösemittelbasierter Füller nach mindestens einem der Ansprüche 4 bis 6, **dadurch gekennzeichnet, dass** das Alkoxysilan die allgemeine Strukturformel (II.1) besitzt

$$OCN\text{-}R_1\text{-}Si(R')_x(OR'')_{3-x}$$

wobei

- $R_1$ ein $C_2$- bis $C_{12}$-Alkylenrest, ein $C_2$- bis $C_{12}$-Alkenylenrest oder ein mehrfach ungesättigter $C_4$- bis $C_{12}$-Alkylenrest ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt.

**8.** Lösemittelbasierter Füller nach Anspruch 7, **dadurch gekennzeichnet, dass** $R_1$ ein $C_2$- bis $C_6$-Alkylenrest ist.

**9.** Lösemittelbasierter Füller nach Anspruch 7, **dadurch gekennzeichnet, dass** x = 0.

**10.** Verfahren zur Herstellung einer Mehrschichtlackierung auf einem Substrat umfassend

(A) Aufbringen des Füllers nach mindestens einem der Ansprüche 1 bis 9,
(B) Aufbringen eines weiteren Lacks.

**11.** Verfahren gemäß Anspruch 10, **dadurch gekennzeichnet, dass**

i. die in Schritt (A) erhaltene Füllerschicht getrocknet wird,
ii. der Lack gemäß Schritt (B) ein Decklack ist, und
iii. die getrocknete Füllerschicht und die in Schritt (B) erhaltene Decklackschicht gemeinsam gehärtet werden.

**12.** Mehrschichtlackierung herstellbar nach dem Verfahren gemäß Anspruch 11.

**13.** Verfahren gemäß Anspruch 10, **dadurch gekennzeichnet, dass**

i. auf das Substrat vor der Applikation des Füllers in Schritt (A) ein Primer aufgebracht wird und die resultierende Primerschicht getrocknet wird,
ii. die getrocknete Primerschicht und die in Schritt (A) erhaltene Füllerschicht gemeinsam gehärtet werden,
iii. der weitere Lack gemäß Schritt (B) ein Basislack ist, dieser auf die gehärtete Füllerschicht aufgetragen und anschließend getrocknet wird und
iv. auf die getrocknete Basislackschicht ein Klarlack aufgebracht wird und die getrocknete Basislackschicht sowie die resultierende Klarlackschicht gemeinsam gehärtet werden.

**14.** Mehrschichtlackierung herstellbar nach dem Verfahren gemäß Anspruch 13.

**15.** Verwendung mindestens eines Additivs in lösemittelbasierten Füllern, **dadurch gekennzeichnet, dass** das Additiv herstellbar ist durch die Umsetzung von

(a) mindestens einem alpha,omega-hydroxyfunktionalisierten Oligoester, welcher eine OH-Zahl von 30 bis 160 mg KOH/g, einen theoretischen Kohlenstoff-Kohlenstoff-Doppelbindungsgehalt von 1 bis 2,5 mmol/g, ein zahlenmittleres Molekulargewicht von 1000 bis 3000 g/mol und ein gewichtsmittleres Molekulargewicht von 2800 bis 10000 g/mol besitzt, und
(b) mindestens einem Alkoxysilan der Strukturformel (II)

$$A\text{-}R\text{-}Si(R')_x(OR'')_{3-x}$$

wobei

- A eine OH-reaktive funktionelle Gruppe ist, nämlich eine Isocyanatgruppe oder eine Epoxidgruppe,
- R ein aliphatischer Rest mit 2 bis 12 Kohlenstoffatomen, ein cycloaliphatischer Rest mit 3 bis 12 Kohlenstoffatomen, ein aromatischer Rest mit 6 bis 12 Kohlenstoffatomen oder ein araliphatischer Rest mit 7 bis 18 Kohlenstoffatomen ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt,

mit der Maßgabe, dass mindestens 90 mol-% aller OH-Gruppen des alpha,omega-hydroxyfunktionalisierten Oligoesters mit einer OH-reaktiven funktionellen Gruppe A zur Reaktion gebracht worden sind,
und zudem die Summe über die gewichtsprozentualen Anteile aller dieser Additive 1,5 bis 10 Gew.-% bezogen auf die Gesamtmenge des lösemittelbasierten Füllers beträgt.

## Claims

**1.** Solventborne primer surfacer **characterized in that** it comprises at least one additive preparable by reacting

(a) at least one alpha,omega-hydroxy-functionalized oligoester which possesses an OH number of 30 to 160 mg KOH/g, a theoretical carbon-carbon double bond content of 1 to 2.5 mmol/g, a number-average molecular weight of 1000 to 3000 g/mol, and a weight-average molecular weight of 2800 to 10 000 g/mol, and
(b) at least one alkoxysilane of the structural formula (II)

$$A\text{-}R\text{-}Si(R')_x(OR'')_{3-x}$$

where

A is an OH-reactive functional group, namely an isocyanate group or an epoxide group,
R is an aliphatic radical having 2 to 12 carbon atoms, a cycloaliphatic radical having 3 to 12 carbon atoms, an aromatic radical having 6 to 12 carbon atoms, or an araliphatic radical having 7 to 18 carbon atoms,
the radical R' is selected from the group of $C_1$ to $C_{12}$ alkyl radicals,

R" is a methyl or ethyl radical, and
x is 0 to 2,

with the proviso that at least 90 mol% of all the OH groups of the alpha,omega-hydroxy-functionalized oligoester have been reacted with an OH-reactive functional group A,
and, moreover, the sum of the weight percentage fractions of all these additives is 1.5 to 10 wt%, based on the total amount of the solventborne primer surfacer.

2. Solventborne primer surfacer according to Claim 1, **characterized in that** the alpha,omega-hydroxy-functionalized oligoester is prepared using at least one saturated linear aliphatic dicarboxylic acid or anhydride thereof, at least one monounsaturated linear aliphatic dicarboxylic acid or anhydride thereof, and at least one saturated aliphatic diol.

3. Solventborne primer surfacer according to at least one of Claims 1 and 2, **characterized in that** the sum of the weight percentage fractions of all the additives is 1.5 to 7.5 wt%, based on the total amount of the solventborne primer surfacer.

4. Solventborne primer surfacer according to at least one of Claims 1 to 3, **characterized in that** the alpha,omega-hydroxy-functionalized oligoester possesses the following structural formula (I):

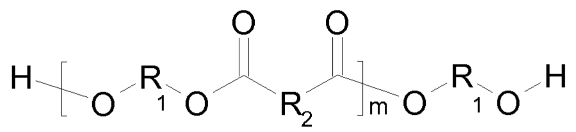

(I)

where

the radicals $R_1$ independently of one another are selected from the group of linear or cyclic alkylene radicals,
the radicals $R_2$ independently of one another are selected from the group of alkylene or alkenylene radicals, the ratio of alkylene to alkenylene radicals being selected specifically such that the alpha,omega-hydroxy-functionalized oligoester of the structural formula (I) possesses a theoretical carbon-carbon double bond content of 1 to 2.5 mmol/g,
the index m is selected such that the number-average molecular weight of the alpha,omega-hydroxy-functionalized oligoester of the structural formula (I) is 1000 to 3000 g/mol.

5. Solventborne primer surfacer according to Claim 4, **characterized in that** the radicals $R_1$ are selected from the group of linear alkylene radicals having 6 to 10 carbon atoms.

6. Solventborne primer surfacer according to at least one of Claims 4 and 5, **characterized in that** the radicals $R_2$ are selected from the group of linear alkylene radicals having 4 to 8 carbon atoms or of linear alkenylene radicals having 2 to 4 carbon atoms.

7. Solventborne primer surfacer according to at least one of Claims 4 to 6, **characterized in that** the alkoxysilane possesses the general structural formula (II.1)

$$OCN\text{-}R_1\text{-}Si(R')_x(OR'')_{3-x}$$

where

$R_1$ is a $C_2$ to $C_{12}$ alkylene radical, a $C_2$ to $C_{12}$ alkenylene radical, or a polyunsaturated $C_4$ to $C_{12}$ alkylene radical,
the radical R' is selected from the group of $C_1$ to $C_{12}$ alkyl radicals,
R" is a methyl or ethyl radical, and
x is 0 to 2.

8. Solventborne primer surfacer according to Claim 7, **characterized in that** $R_1$ is a $C_2$ to $C_6$ alkylene radical.

9. Solventborne primer surfacer according to Claim 7, **characterized in that** x = 0.

**10.** Process for producing a multicoat paint system on a substrate, comprising

(A) applying the primer surfacer according to at least one of Claims 1 to 9,
(B) applying a further coating material.

**11.** Process according to Claim 10, **characterized in that**

i. the primer surfacer film obtained in step (A) is dried,
ii. the coating material in step (B) is a topcoat material, and
iii. the dried primer surfacer film and the topcoat film obtained in step (B) are jointly cured.

**12.** Multicoat paint system producible by the process according to Claim 11.

**13.** Process according to Claim 10, **characterized in that**

i. a primer is applied to the substrate before the application of the primer surfacer in step (A), and the resulting primer film is dried,
ii. the dried primer film and the primer surfacer film obtained in step (A) are jointly cured,
iii. the further coating material in step (B) is a basecoat material, and is applied to the cured primer surfacer film and subsequently dried, and
iv. a clearcoat material is applied to the dried basecoat film, and the dried basecoat film and the resulting clearcoat film are jointly cured.

**14.** Multicoat paint system producible by the process according to Claim 13.

**15.** Use of at least one additive in solventborne primer surfacers, **characterized in that** the additive is preparable by reacting

(a) at least one alpha,omega-hydroxy-functionalized oligoester which possesses an OH number of 30 to 160 mg KOH/g, a theoretical carbon-carbon double bond content of 1 to 2.5 mmol/g, a number-average molecular weight of 1000 to 3000 g/mol, and a weight-average molecular weight of 2800 to 10 000 g/mol, and
(b) at least one alkoxysilane of the structural formula (II)

$$A\text{-}R\text{-}Si(R')_x(OR_{3-x}$$

where

A is an OH-reactive functional group, namely an isocyanate group or an epoxide group,
R is an aliphatic radical having 2 to 12 carbon atoms, a cycloaliphatic radical having 3 to 12 carbon atoms, an aromatic radical having 6 to 12 carbon atoms, or an araliphatic radical having 7 to 18 carbon atoms,
the radical R' is selected from the group of $C_1$ to $C_{12}$ alkyl radicals,
R" is a methyl or ethyl radical, and
x is 0 to 2,

with the proviso that at least 90 mol% of all the OH groups of the alpha,omega-hydroxy-functionalized oligoester have been reacted with an OH-reactive functional group A,
and, moreover, the sum of the weight percentage fractions of all these additives is 1.5 to 10 wt%, based on the total amount of the solventborne primer surfacer.

## Revendications

**1.** Charge à base de solvant, **caractérisée en ce qu'**elle contient au moins un additif, qui peut être préparé par la transformation

(a) d'au moins un oligoester fonctionnalisé par hydroxy en positions alpha, oméga, qui présente un indice d'OH de 30 à 160 mg de KOH/g, une teneur théorique en doubles liaisons carbone-carbone de 1 à 2,5 mmoles/g, un poids moléculaire numérique moyen de 1000 à 3000 g/mole et un poids moléculaire pondéral moyen de

2800 à 10.000 g/mole, et
(b) d'au moins un alcoxysilane de formule de structure (II)

$$A\text{-}R\text{-}Si(R')_x(OR'')_{3-x}$$

dans laquelle

- A représente un groupe fonctionnel réactif avec OH, à savoir un groupe isocyanate ou un groupe époxyde,
- R représente un radical aliphatique comprenant 2 à 12 atomes de carbone, un radical cycloaliphatique comprenant 3 à 12 atomes de carbone, un radical aromatique comprenant 6 à 12 atomes de carbone ou un radical araliphatique comprenant 7 à 18 atomes de carbone,
- le radical R' est choisi dans le groupe des radicaux $C_1$-$C_{12}$-alkyle,
- R" représente un radical méthyle ou éthyle et
- x = 0 à 2,

à condition qu'au moins 90% de tous les groupes OH de l'oligoester fonctionnalisé par hydroxy en positions alpha, oméga aient été amenés à réagir avec un groupe A fonctionnel réactif avec OH et qu'en outre la somme des pourcentages en poids de tous ces additifs représente 1,5 à 10% en poids, par rapport à la quantité totale de la charge à base de solvant.

**2.** Charge à base de solvant selon la revendication 1, **caractérisée en ce que**, pour la préparation de l'oligoester fonctionnalisé par hydroxy en positions alpha, oméga, on utilise au moins un acide dicarboxylique aliphatique linéaire saturé ou son anhydride, au moins un acide dicarboxylique aliphatique linéaire monoinsaturé ou son anhydride et au moins un diol aliphatique saturé.

**3.** Charge à base de solvant selon au moins l'une quelconque des revendications 1 et 2, **caractérisée en ce que** la somme des pourcentages en poids de tous les additifs représente 1,5 à 7,5% en poids, par rapport à la quantité totale de la charge à base de solvant.

**4.** Charge à base de solvant selon au moins l'une quelconque des revendications 1 à 3, **caractérisée en ce que** l'oligoester fonctionnalisé par hydroxy en positions alpha, oméga présente la formule de structure (I) suivante :

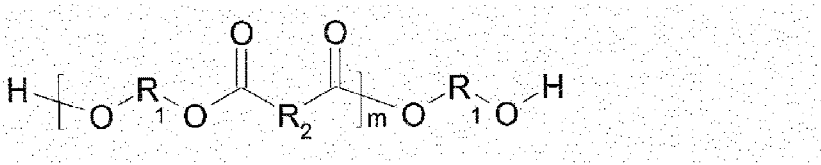

(I)

dans laquelle

- les radicaux $R_1$ sont choisis, indépendamment les uns des autres, dans le groupe des radicaux alkylène linéaires ou cycliques,
- les radicaux $R_2$ sont choisis, indépendamment les uns des autres, dans le groupe des radicaux alkylène ou alcénylène, le rapport des radicaux alkylène aux radicaux alcénylène étant justement choisi de manière telle que ledit oligoester fonctionnalisé par hydroxy en positions alpha, oméga de formule de structure (I) présente une teneur théorique en doubles liaisons carbone-carbone de 1 à 2,5 mmoles/g,
- l'indice m est choisis de manière telle que le poids moléculaire numérique moyen de l'oligoester fonctionnalisé par hydroxy en positions alpha,oméga de formule de structure (I) est de 1000 à 3000 g/mole.

**5.** Charge à base de solvant selon la revendication 4, **caractérisée en ce que** les radicaux $R_1$ sont choisis dans le groupe des radicaux alkylène linéaires comprenant 6 à 10 atomes de carbone.

**6.** Charge à base de solvant selon au moins l'une quelconque des revendications 4 et 5, **caractérisée en ce que** les radicaux $R_2$ sont choisis dans le groupe des radicaux alkylène linéaires comprenant 4 à 8 atomes de carbone ou des radicaux alcénylène linéaires comprenant 2 à 4 atomes de carbone.

**7.** Charge à base de solvant selon au moins l'une quelconque des revendications 4 à 6, **caractérisée en ce que**

l'alcoxysilane présente la formule de structure générale (II.1)

$$OCN\text{-}R_1\text{-}Si(R')_x(OR'')_{3\text{-}x}$$

dans laquelle

- $R_1$ représente un radical $C_2$-$C_{12}$-alkylène, un radical $C_2$-$C_{12}$-alcénylène ou un radical $C_4$-$C_{12}$-alkylène polyinsaturé,
- le radical R' est choisi dans le groupe des radicaux $C_1$-$C_{12}$-alkyle,
- R" représente un radical méthyle ou éthyle et
- x = 0 à 2.

**8.** Charge à base de solvant selon la revendication 7, **caractérisée en ce que** $R_1$ représente un radical $C_2$-$C_6$-alkylène.

**9.** Charge à base de solvant selon la revendication 7, **caractérisée en ce que** x = 0.

**10.** Procédé pour la réalisation d'un laquage multicouche sur un substrat, comprenant

(A) l'application de la charge selon au moins l'une quelconque des revendications 1 à 9,
(B) l'application d'une autre laque.

**11.** Procédé selon la revendication 10, **caractérisé en ce que**

i. la couche de charge obtenue dans l'étape (A) est séchée,
ii. la laque selon l'étape (B) est une laque de recouvrement et
iii. la couche de charge séchée et la couche de laque de recouvrement obtenue dans l'étape (B) sont durcies ensemble.

**12.** Laquage multicouche pouvant être réalisé par le procédé selon la revendication 11.

**13.** Procédé selon la revendication 10, **caractérisé en ce que**

i. un apprêt est appliqué sur le substrat avant l'application de la charge dans l'étape (A) et la couche d'apprêt obtenue est séchée,
ii. la couche d'apprêt séchée et la couche de charge obtenue dans l'étape (A) sont durcies ensemble.
iii. l'autre laque selon l'étape (B) est une laque de base, celle-ci est appliquée sur la couche de charge durcie et ensuite séchée et
iv. une laque claire est appliquée sur la couche de laque de base séchée et la couche de laque de base séchée ainsi que la couche de laque claire obtenue sont durcies ensemble.

**14.** Laquage multicouche pouvant être réalisé par le procédé selon la revendication 13.

**15.** Utilisation d'au moins un additif dans des charges à base de solvant, **caractérisée en ce que** l'additif peut être préparé par la transformation

(a) d'au moins un oligoester fonctionnalisé par hydroxy en positions alpha, oméga, qui présente un indice d'OH de 30 à 160 mg de KOH/g, une teneur théorique en doubles liaisons carbone-carbone de 1 à 2,5 mmoles/g, un poids moléculaire numérique moyen de 1000 à 3000 g/mole et un poids moléculaire pondéral moyen de 2800 à 10.000 g/mole, et
(b) d'au moins un alcoxysilane de formule de structure (II)

$$A\text{-}R\text{-}Si(R')_x(OR'')_{3\text{-}x}$$

dans laquelle

- A représente un groupe fonctionnel réactif avec OH, à savoir un groupe isocyanate ou un groupe époxyde,
- R représente un radical aliphatique comprenant 2 à 12 atomes de carbone, un radical cycloaliphatique comprenant 3 à 12 atomes de carbone, un radical aromatique comprenant 6 à 12 atomes de carbone ou

un radical araliphatique comprenant 7 à 18 atomes de carbone,
- le radical R' est choisi dans le groupe des radicaux $C_1$-$C_{12}$-alkyle,
- R" représente un radical méthyle ou éthyle et
- x = 0 à 2,

à condition qu'au moins 90% de tous les groupes OH de l'oligoester fonctionnalisé par hydroxy en positions alpha, oméga aient été amenés à réagir avec un groupe A fonctionnel réactif avec OH et qu'en outre la somme des pourcentages en poids de tous ces additifs représente 1,5 à 10% en poids, par rapport à la quantité totale de la charge à base de solvant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1995261 A1
- US 6048579 A
- WO 2008067967 A2


### In der Beschreibung aufgeführte Nicht-Patentliteratur


- Römpp-Lexikon Lacke und Druckfarben. Georg Thieme Verlag, 1998, 73-74
- Römpp-Lexikon Lacke und Druckfarben. Georg Thieme Verlag, 1998, 196-197
- Römpp-Lexikon Lacke und Druckfarben. Georg Thieme Verlag, 1998, 250-252
- Römpp-Lexikon Lacke und Druckfarben. Georg Thieme Verlag, 1998, 451